(19) Europäisches Patentamt
European Patent Office
Office européen des brevets

(11) **EP 3 220 575 B1**

(12) **EUROPÄISCHE PATENTSCHRIFT**

(45) Veröffentlichungstag und Bekanntmachung des Hinweises auf die Patenterteilung:
**26.09.2018   Patentblatt 2018/39**

(51) Int Cl.:
***H04L 9/08*** *(2006.01)*

(21) Anmeldenummer: **17156841.3**

(22) Anmeldetag: **20.02.2017**

(54) **VERFAHREN ZUR HERSTELLUNG EINER SICHEREN KOMMUNIKATION ZWISCHEN EINEM CLIENT UND EINEM SERVER**

METHOD FOR ESTABLISHMENT OF SECURE COMMUNICATION BETWEEN A CLIENT AND A SERVER

PROCÉDÉ DE FABRICATION D'UNE COMMUNICATION SÉCURISÉE ENTRE UN CLIENT ET UN SERVEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.03.2016   EP 16160925**

(43) Veröffentlichungstag der Anmeldung:
**20.09.2017   Patentblatt 2017/38**

(73) Patentinhaber:
• **Schmidt, Marcellus**
  **77855 Achern (DE)**
• **Schmidt, Marius**
  **77855 Achern (DE)**

(72) Erfinder:
• **Schmidt, Marcellus**
  **77855 Achern (DE)**
• **Schmidt, Marius**
  **77855 Achern (DE)**

(74) Vertreter: **Durm Patentanwälte PartG mbB**
  **Patentanwälte**
  **Moltkestrasse 45**
  **76133 Karlsruhe (DE)**

(56) Entgegenhaltungen:
  **US-A1- 2003 115 464     US-A1- 2012 082 312**

**Beschreibung**

Die vorliegende Erfindung betrifft ein Verfahren zur Herstellung einer sicheren Kommunikation zwischen einem Client und einem Server als Kommunikationspartner über eine ungesicherte Datenverbindung zur Übertragung von Daten. Die Datenverbindung kann eine offene, gegebenenfalls unsichere Verbindung sein. Das Verfahren beruht auf der Verwendung von kryptografischen Schlüsseln, mit denen die übermittelten Daten verschlüsselt werden.

Um eine gesicherte Kommunikationsverbindung zwischen zwei Rechner, in der Regel einem Client-Rechner und einem Server, herzustellen, sind unterschiedliche Verfahren bekannt. Im Regelfall erfolgt die Identifikation eines Benutzers an einem Client-Rechner bzw. die Identifikation des Clients mit Hilfe der Übertragung einer Kombination aus Benutzernamen und Passwort. Auf dem Server werden sogenannte Hashwerte des benutzten Passworts gespeichert. Dieser Wert wird mit einem ermittelten Hashwert des in der Regel im Klartext übertragenen Passworts verglichen. Auf diese Weise wird ein Schutz gegenüber dem Diebstahl der hinterlegten Passworte gewährleistet. Damit der Passwortversand vertraulich bleibt, muss zunächst eine sichere Verbindung hergestellt werden, die dann zur Übertragung genutzt wird. Derartige Verfahren, die auf einer passwortbasierten Authentifizierung beruhen, haben den Nachteil, dass das Passwort prinzipiell mitgelesen werden kann und bei Kenntnis des Passworts ab diesem Zeitpunkt neue Identifizierungen durch einen Angreifer oder Dritten durchgeführt werden können. Bei sogenannten Man-in-the-Middle-Angriffen erfolgt deshalb das organisierte Mitschneiden übertragener Passworte.

Zusätzlich besteht bei einer passwortbasierten Authentifizierung die Gefahr, dass Passwortdaten in Logdateien gelangen und dort im Klartext auslesbar sind, obwohl auf einem Server nur Hashwerte der Passworte hinterlegt sein sollten.

Ein solches Verfahren zur Herstellung einer gesicherten Verbindung, stellt das sogenannte TLS-Verfahren (Transport Layer Security) dar, das häufig auch SSL-Protokoll genannt wird. Dieses Verfahren stellt die Vertraulichkeit und Integrität zwischen zwei Rechner sicher. Es bietet jedoch keine Möglichkeit, die Identität eines Benutzers eines Rechners nachzuvollziehen. Derartige Verfahren basieren auf dem sogenannten Public Key Infrastructure Prinzip (PKI). Dazu werden Zertifikate von vertrauenswürdigen Stellen, sogenannten Certificate Authorities (CA), ausgestellt und signiert. Zertifikate können aber auch von jedem Rechner ausgestellt werden. In diesem Fall ist es möglich, dass ein Man in the Middle selbst eine Kopie eines solchen Zertifikats ausstellt, überträgt und somit vertrauliche Daten entschlüsseln kann.

Ein weiteres im Stand der Technik bekanntes Verfahren basiert auf der Secure Shell Authentication (SSH). Eine Benutzerauthentifizierung erfolgt entweder über ein Passwort oder über ein Schlüsselpaar aus öffentlichem oder privatem Schlüssel. Bei einer Passwortauthentifizierung ergeben sich die gleichen Probleme wie beim TLS Verfahren. Bei der Verwendung von öffentlichen und privaten Schlüsselpaaren müssen diese an die benutzten Endgeräte übertragen und dort hinterlegt werden.

Neben der passwortbasierten Authentifizierung ist auch eine passwortlose Authentifizierung bekannt. Allerdings sind die auf einem Server gespeicherten Informationen kritischer als bei passwortbasierten Authentifizierungslösungen.

Ein Beispiel für eine passwortlose Authentifizierung ist das sogenannte Digest Access Authentication, bei dem zwar ein Benutzer authentifiziert wird, aber keine Schlüssel erzeugt werden, die für eine sichere Kommunikation verwendet werden könnten. Es müssen also weitere Verschlüsselungsverfahren herangezogen werden. Die Authentifizierung geschieht nicht mittels Übertragung des Passworts, sondern durch Berechnung von Hash-Werten, die vom Server überprüft werden. Da die auf dem Server gespeicherten Informationen für eine Identifikation eines Benutzers ausreichend sind, können beispielsweise durch Insider gestohlene Daten später verwendet werden, um Nichtberechtigte als Benutzer zu authentifizieren. Darüber hinaus besteht für den Client keine Möglichkeit, die Identität des Rechners zu überprüfen. Auch dieses Verfahren ist gegen Man-in-the-Middle-Angriffe anfällig.

Ein weiteres Verfahren ist der sogenannte Salted Challenge Response Authentication Mechanism (SCRAM), bei dem zwar ein Benutzer authentifiziert wird, aber keine Schlüssel für eine sichere Kommunikation erzeugt werden.

Die auf dem Server gespeicherten Informationen reichen alleine nicht aus, um sich als Benutzer zu authentisieren. Allerdings kann durch das Abfangen eines erfolgreichen "Handshakes" in Kombination mit auf dem Server gespeicherten Informationen die Identität eines Benutzers angenommen werden. Mittels eines sogenannten Stored Key des Servers und den abgefangenen Authmessage-Informationen eines Handshakes kann ein Wert rekonstruiert werden, der ausreichend ist, um beliebige weitere Authentisierungsvorgänge erfolgreich abzuschließen, ähnlich wie beim Besitz des Passworts.

Ein weiteres bekanntes Verschlüsselungsverfahren ist das sogenannte Secure Remote Passwort Protokoll (SRP). Dieses Protokoll benötigt zur Durchführung einer Schlüsselvereinbarung eine algebraische Struktur, die in der Mathematik "Körper" genannt wird. Eine mathematische "Gruppe" ist für dieses Verfahren nicht ausreichend.

Während eine mathematische Gruppe eine Menge von Elementen mittels einer einzigen Verknüpfung von zwei Elementen zu einem dritten Element derselben Menge verknüpft und drei mathematische Gruppenaxiome erfüllt sein müssen, fordert ein mathematischer Körper, dass zwei Verknüpfungen existieren müssen. Im Fall der mathematischen Gruppe sind die Gruppenaxiome die Assoziativität, die Existenz eines neutralen Elementes und die Existenz eines inversen Elementes. Bei einem mathematischen Körper müssen die Körperaxiome umfangreicher sein als die Gruppenaxiome.

Die im Stand der Technik bekannten Verfahren sind entweder sehr aufwändig, abhängig von Dritten oder ermöglichen nicht die verwendeten Client-Rechner und Server untereinander zu authentifizieren und gleichzeitig Verschlüsselungsmöglichkeiten zur Verfügung zu stellen, um eine gesicherte Kommunikation über ungesicherte Verbindungswege zu realisieren. Es besteht jedoch Bedarf an einer Möglichkeit, auf einfache Weise eine gesicherte Kommunikation herzustellen und gleichzeitig Angriffe, beispielsweise die eines Man in the Middle, zu erkennen und zu unterbinden, ohne von Dritten abhängig zu sein.

Diese Probleme und der bestehende Bedarf an einem optimierten sicheren Kommunikationsverfahren wird mittels des erfindungsgemäßen Verfahrens gemäß Anspruch 1 gelöst.

Das erfindungsgemäße Verfahren dient zur Herstellung einer sicheren Kommunikation zwischen einem Client-Rechner und einem Server über eine ungesicherte Datenverbindung, um Daten zwischen Client und Server zu übertragen. Client und Server sind dabei Kommunikationspartner.

Das Verfahren beruht auf zwei Stufen, wobei zunächst in einer ersten Stufe von beiden Kommunikationspartnern eine gemeinsame Schlüsselbasis berechnet wird. Mittels dieser gemeinsamen Schlüsselbasis werden für alle weiteren Kommunikationsvorgänge zwischen den Kommunikationspartnern temporäre Sitzungsschlüssel abgeleitet, die für eine nachfolgende Kommunikation während einer Sitzung eingesetzt werden können. Hierbei ist die Erzeugung der Sitzungsschlüssel auf Grundlage der Schlüsselbasis derart einfach und schnell zu realisieren, dass auch Schlüssel erzeugt werden können, die nur kurze Zeit gültig sind. Das Verfahren bietet darüber hinaus die Möglichkeit, dass für jedes Programm und jede Applikation, die auf einem Client-Rechner ausgeführt wird und mit dem Server kommuniziert, ein eigener individueller Sitzungsschlüssel erstellt wird.

Das erfindungsgemäße Verfahren ist so gestaltet, dass vor der Berechnung der Schlüsselbasis die Identität des Clients auf der einen Seite und die Identität des Servers auf der anderen Seite anhand von Passwortkenntnis überprüft werden, ohne dass jedoch diese Passwortdaten zu irgendeinem Zeitpunkt in irgendeiner Form während des Verfahrens übermittelt werden. Auch die Ableitung der Sitzungsschlüssel ist in dieser Art gestaltet, so dass die Kenntnis der zur Gegenseite der Kommunikation passenden und zuvor hergeleiteten Schlüsselbasis jeweils überprüft wird.

Zusätzlich bietet das erfindungsgemäße Verfahren eine hohe Sicherheit, da die Kenntnis der Informationen einer der Kommunikationspartner nicht ausreicht, um damit die Identität eines Kommunikationspartners bzw. der Gegenstelle für eine neue Schlüsselberechnung (Schlüsselbasis) oder für die Ableitung eines neuen Sitzungsschlüssels anzunehmen. Beispielsweise reicht die Kenntnis der zur Identitätsprüfung notwendigen Daten, die aus Passworten abgeleitet werden, oder die Kenntnis der ausgehandelten Schlüsselbasis des Servers nicht aus, um damit einen zur Schlüsselbasis passenden Client-Rechner zu imitieren oder einen neuen Schlüsselaustausch abzuschließen. Ebenso ist es nicht ausreichend, in Kenntnis der Schlüsselbasis des Client-Rechners zu sein, um damit den Server zu imitieren, sich als solcher auszugeben und eine Authentifizierung abzuschließen. Insofern weist das erfindungsgemäße Verfahren eine hohe Sicherheit auf.

In einem ersten Schritt des erfindungsgemäßen Verfahrens wird eine erste Schlüsselbasis im Client-Rechner erzeugt und eine zweite Schlüsselbasis im Server-Rechner. Die erste Schlüsselbasis, auch Client-Schlüsselbasis genannt, umfasst einen Client-Basisschlüssel und einen Serververifizierwert, der einen korrespondierenden Wert für einen Server-Basisschlüssel darstellt und mittels des Server-Basisschlüssels berechnet wird.

Die zweite Schlüsselbasis, auch Server-Schlüsselbasis genannt, umfasst den Server-Basisschlüssel und einen Clientverifizierwert, der auf dem Client-Basisschlüssel beruht und aus diesem berechnet wird. Somit umfasst also jede Schlüsselbasis einen Basisschlüssel und einen Verifizierwert für einen komplementären Basisschlüssel. Die Grundlage des Verfahrens sind also zwei zueinander gehörende Schlüsselbasen mit insgesamt zwei Basisschlüssel und zwei Verifizierwerten dieser Basisschlüssel. Jede Schlüsselbasis umfasst dabei einen Basisschlüssel und einen komplementären Verifizierwert des jeweils anderen Basisschlüssels.

In einem weiteren Schritt wird auf Grundlage der jeweiligen Schlüsselbasis ein Sitzungsschlüssel erzeugt, wobei der Sitzungsschlüssel im Client-Rechner (genannt Client) und im Server-Rechner (genannt Server) erzeugt werden, so dass Client und Server den gleichen Sitzungsschlüssel besitzen. Die Sitzungsschlüssel werden jeweils mittels der entsprechenden Schlüsselbasis generiert. Dies erfolgt bevorzugt unabhängig voneinander und lediglich unter Einbeziehung des übertragenen Client- bzw. Server-ID Prüfkeys der Gegenseite.

In einem weiteren Schritt kann nun nach Erzeugung der Sitzungsschlüssel ein Verschlüsseln aller zu übertragenden Daten in einem Sender stattfinden. Die Daten werden dabei mit dem generierten Sitzungsschlüssel vor der Übertragung verschlüsselt. Sender kann sowohl der Client als auch der Server sein, da eine bidirektionale Kommunikation möglich ist, wie es in der Regel gefordert wird.

In einem weiteren Schritt werden die verschlüsselten Daten empfangen und mit Hilfe des in dem jeweiligen Kommunikationspartner gespeicherten Sitzungsschlüssels entschlüsselt. Der als Empfänger arbeitende Kommunikationspartner kann dabei sowohl der Client als auch der Server sein.

Erfindungsgemäß wird schon während der Erzeugung der Schlüsselbasis und der Erzeugung des Sitzungsschlüssels eine Authentifizierung durchgeführt. Jeder Kommunikationspartner kann dabei die Authentizität des Gegenübers, also des anderen Kommunikationspartners, verifizieren. Auf diese Weise wird eine sichere und unbeeinflusste Übertragung von Daten, die zur Erzeugung der Schlüsselbasis und des Sitzungsschlüssels notwendig sind, gewährleistet und kann überprüft werden.

Um das erfindungsgemäße Verfahren durchzuführen, hat es sich als vorteilhaft erwiesen, wenn vorher eine Registrierung sowohl des Clients als auch des Servers erfolgt.

Auf dem Server müssen zur Überprüfung der Identität eines Clients als Kommunikationspartner notwendige Informationen hinterlegt werden. Dies geschieht bevorzugt während einer einmalig vorzunehmenden Registrierung des Clients am Server. Die gespeicherten Werte umfassen dabei bevorzugt einen dem Client oder seinem Benutzer eindeutig zugeordneten Identifikationswert *ID* sowie eine einmalige Hilfszahl *ps,* die zufällig und für jeden Client bzw. Benutzer unterschiedlich ist. Zusätzlich kann auf dem Server ein Client-Passwort-Verifikationswert *v* hinterlegt sein, der aufgrund eines Passworts *pw* errechnet wird. Der Client-Passwort-Verifikationswert *v* ist für jeden Client bzw. Benutzer einmalig. Er ermöglicht dem Server die Kenntnis des Benutzers dieses Passworts *pw* zu überprüfen. Im Rahmen dieser Beschreibung ist der Begriff "Passwort" allgemein zu verstehen und beschränkt sich nicht auf alphanumerische Zeichen oder Zeichenketten. Er umfasst vielmehr auch andere Identifikationsmerkmale, wie beispielsweise biometrische Daten, Fingerabdruck oder Irisscans o.ä..

Der Identifikationswert, der auch ein Benutzername sein kann, kann wahlweise als Hash-Wert oder als Klartext abgelegt sein. Er dient lediglich der Zuordnung zwischen einem Client oder Benutzer, der authentifiziert werden soll, und der im Server gespeicherten Hilfszahl *ps* des zugehörigen Client-Passwort-Verifikationswertes *v*. Hierbei muss der sich zu authentifizierende Client bevorzugt die korrekte Form des Wertes *ID* übermitteln, also entweder den Hash-Wert des Benutzer- oder Passwortnamens oder den Klartextwert.

Der Client-Passwort-Verifizierwert *v* wird bei der Registrierung eines Clients bzw. Benutzers auf dem Server folgendermaßen berechnet:

$$v = g^x \bmod p$$

Dabei ist *x* ein Client-Passwort-Ableitwert aus dem Passwort *pw,* das beispielsweise durch Eingabe in einer Eingabemaske bereitgestellt werden kann.

Zur besseren Lesbarkeit wird in dieser Beschreibung die Notation für Berechnungen in einer Restklasse modulo *p* verwendet. Um das erfindungsgemäße Verfahren durchzuführen, ist jedoch eine geeignete mathematische Gruppe bereits ausreichend, da für sämtliche Berechnungen sowohl client- als auch serverseitig lediglich eine einzige Verknüpfung als Verarbeitungsvorschrift zweier Werte benötigt wird. Somit kann das erfindungsgemäße Verfahren beispielsweise auch unter Einsatz elliptischer Kurven durchgeführt werden.

Die Berechnung des Client-Passwort-Ableitwertes *x* erfolgt mittels einer sogenannten Schlüsselableitfunktion (Key Derivation Function), $KDF_{PW}$, auch einfach Ableitfunktion genannt. Als Funktionsparameter werden das Passwort *pw* sowie die zufällige Hilfszahl *ps* verwendet, so dass sich ergibt:

$$x = KDF_{PW}(pw, ps)$$

Nach Berechnung des Client-Passwort-Verifikationswerts *v* kann bevorzugt sichergestellt werden, dass auf dem Server keine wiederherstellbare Form des Passworts *pw* und des Client-Passwort-Ableitwertes *x* existiert.

Der verwendete Parameter *g* ist ein Element einer geeigneten mathematischen Gruppe, beispielsweise einer Restklasse modulo einer Primzahl *p,* mit der Multiplikation als benutzte Verknüpfung, oder ein Punkt auf einer geeigneten elliptischen Kurve mit der auf elliptischen Kurven definierten Addition. Diese und weitere Werte werden im Kapitel Begriffserklärungen erläutert.

Neben der Registrierung des Clients auf dem Server wird bevorzugt die Identität des Servers auf dem benutzten Client registriert. Diese sogenannte Serverregistrierung setzt eine eindeutige Identität des Servers voraus. Sie setzt sich bevorzugt aus einer Zufallszahl $ps_{Auth}$ und einem mit Hilfe eines Server-Passworts $pw_{Auth}$ errechneten Server-Passwort-Ableitwerts *y* zusammen. *y* wird bevorzugt mittels einer Ableitfunktion berechnet, wobei gilt:

$$y = KDF_{PW}(pw_{Auth}, ps_{Auth})$$

Mit y wird dann bevorzugt auf dem Client der Server-Passwort-Verifizierwert w berechnet, mit dem die Identität des Servers durch den Client überprüft wird. Diese Überprüfung kann im Client-Rechner stattfinden. Hierbei gilt:

$$w = g^y \bmod p$$

Der Wert $pw_{Auth}$ kann beispielsweise beim Start des Servers auf dem Server und auf dem Client beim Ausführen einer Schlüsselberechnung eingegeben werden oder hinterlegt sein. Die öffentliche Zufallshilfszahl $ps_{Auth}$ wird bevorzugt für die Serverregistrierung auf dem Client auf Anfrage vom Server bekanntgegeben. Nach Erzeugung des Server-Passwort-Ableitwertes y und des Server-Passwort-Verifizierwertes w auf dem Client darf der Client bevorzugt keine Kenntnis des Server-Passwortes $pw_{Auth}$ oder des daraus abgeleiteten und berechneten Server-Passwort-Ableitwerts y haben. Beide Werte müssen nach der Berechnung sofort gelöscht werden.

In einer bevorzugten Ausführungsform des erfindungsgemäßen Verfahrens werden während der Erzeugung der Basisschlüssel, der Schlüsselbasen und des Sitzungsschlüssels Prüfsummen gebildet, die an den Kommunikationspartner übermittelt werden. Der Kommunikationspartner erstellt selbst Prüfsummen und vergleicht diese mit den übermittelten Prüfsummen. Auf diese Weise lässt sich eine unbeeinflusste und nicht kompromittierte Übertragung von öffentlichen Parametern während der Schlüsselerzeugung überprüfen und bestätigen. Sollte der Vergleich der entsprechenden Prüfsummen eine Abweichung ergeben, wird eine Manipulation der übertragenen Daten auf dem Übertragungsweg festgestellt, die beispielsweise durch einen Man-in-the-Middle-Angriff hervorgerufen sein kann. Das Schlüsselerzeugungsverfahren wird dann abgebrochen und neu gestartet.

Vorzugsweise basiert die Erzeugung der Basisschlüssel und der Sitzungsschlüssel auf privaten und geheimen Zufallswerten, die jedenfalls teilweise selbst generiert sind, sowie auf öffentlich zugänglichen Parametern, die von den Kommunikationspartnern erzeugt und empfangen werden.

Bevorzugt erfolgt neben der Registrierung des Clients beim Server auch eine anschließende Anmeldung beim Server, bei der die Schlüsselbasis und die Basisschlüssel erzeugt werden.

Jeder der Kommunikationspartner ist bevorzugt in Besitz eines Verifikationswerts, der zur Überprüfung dient, ob der jeweils andere Kommunikationspartner Kenntnis über sein eigenes Passwort hat.

Das Verfahren ist so ausgelegt, dass bevorzugt auf einem Client und auf einem Server mehrere Sitzungsschlüssel erzeugt werden, die von unterschiedlichen Programmen und Applikationen auf dem Client zur jeweiligen Kommunikation mit dem Server verwendet werden. Jede Applikation verwendet einen eigenen unabhängigen Sitzungsschlüssel. Daneben können auf jeden Client und jedem Server auch mehrere Schlüsselbasen vorliegen, wenn ein Client mit mehreren Servern bzw. ein Server mit mehreren Clients kommuniziert.

Falls der Server mit einem geänderten Server-Passwort $pw'_{Auth}$ gestartet wird, werden dadurch alle Clients zu einer erneuten Schlüsselberechnung gezwungen, da sich die weiteren Berechnungen der Schlüsselbasis auf den Server-Passwort-Identifizierwert w stützen und ihn verwenden. Im Falle eines neuen Passworts am Server muss der Server folglich auf den Clients, mit denen er kommunizieren will, erneut registriert werden. Gleiches gilt, wenn der Client mit einem neuen Passwort pw' arbeitet. Auch dann ist eine neue Registrierung des Clients auf dem Server notwendig.

Das erfindungsgemäße Verfahren ist in die beiden Teile Berechnung der Schlüsselbasis und Berechnung der Sitzungsschlüssel unterteilt. Zunächst wird in dem Teilschritt der Berechnung der Schlüsselbasis die Identität beider Seiten gegenüber dem anderen Kommunikationspartner sichergestellt und mittels Berechnungen innerhalb einer geeigneten mathematischen Gruppe G eine gemeinsame Schlüsselbasis ausgehandelt bzw. erzeugt. Der zweite Teil des Verfahrens dient der Erzeugung von Sitzungsschlüsseln für einzelne Kommunikationsvorgänge bzw. der Kommunikation einzelner Applikationen auf dem Client und Server. Hierzu wird die Schlüsselbasis verwendet. Gleichzeitig wird die Kenntnis der jeweiligen zur Gegenseite passenden und zugehörigen Schlüsselbasis nachgewiesen. Selbstverständlich lassen sich mit einer Schlüsselbasis eine Vielzahl von Sitzungsschlüsseln erstellen.

In dem Verfahren zur Berechnung der Schlüsselbasis stellt bevorzugt zunächst der Client seinen Identifikationswert der eigenen Identität zur Verfügung und übermittelt diesen an den Server, bei dem sich der Client authentifizieren will. Der Server sucht die zu dem Identifikationswert ID passende Identität und die zugehörigen Parameter, die auf dem Server hinterlegt sind. Dies sind die zugeordneten Werte Zufallswert ps sowie Client-Passwort-Verifizierwert v. In einem weiteren Schritt erzeugt der Server bevorzugt einen zufälligen, privaten Zufallsschlüssel, den Client-ID-Prüfwert c und berechnet aus diesem mit Hilfe der geeigneten mathematischen Gruppe G und des Parameters g einen öffentlichen Zufallsschlüssel. Hierbei gilt

$$C = g^c \bmod p$$

In einem weiteren Schritt übermittelt der Server bevorzugt den öffentlichen Zufallsschlüssel C, der auch Client-ID-Prüfkey bzw. Prüfschlüssel genannt wird, sowie die Hilfszahl ps, an den Client.

In einer bevorzugten Ausführungsform des erfindungsgemäßen Verfahrens werden zur Erzeugung der Schlüsselbasis im Client und im Server mehrere Schritte ausgeführt. Zunächst erzeugt der Client bevorzugt einen zufälligen, privaten Zufallsschlüssel, den Server-ID-Prüfwert d und berechnet aus diesem mit Hilfe der mathematischen Gruppe G

und des Parameters *g* einen öffentlichen Zufallsschlüssel. Hierbei gilt

$$D = g^d \; mod \; p$$

In einem weiteren Schritt wird ein kryptografischer Hilfsschlüssel, der sogenannte Hilfskey *k*, mittels eines zuvor erzeugten oder berechneten Client-Schlüsselgrundwertes $X_1$ berechnet. Bevorzugt wird der Hilfskey *k* mittels einer ersten Hilfszahl $s_1$ berechnet. Die Hilfszahl $s_1$ ist frei wählbar und in der Regel eine Zufallszahl. Der Hilfskey *k*, auch Intermediate-Key genannt, wird zur Verschlüsselung eines Client-Authentifizierschlüssels (Client-Auth-Key) *A* verwendet. Durch die Verschlüsselung dieses Authentifizierschlüssels kann ein erster Authentifizier-Crypto-Wert $c_1$ erzeugt werden.

Ein bevorzugter Schritt umfasst dabei das vorhergehende Generieren eines zufälligen privaten Client-Authentifizierwertes *a*, aus dem ein öffentlicher Client-Authentifizierschlüssel (Client-Auth-Key) *A* erzeugt wird. Vorzugsweise erfolgt das Erzeugen des Client-Auth-Keys *A* mittels des Parameters *g* der mathematischen Gruppe *G,* wobei gilt:

$$A = g^a \; mod \; p$$

Der Authentifizier-Crypto-Wert $c_1$ wird bevorzugt gemeinsam mit der frei gewählten ersten Hilfszahl $s_1$ und dem Server-Identifikationsprüfschlüssel (Server-ID-Prüfkey) *D* an den Server übertragen.

Weitere Verfahrensschritte werden nun bevorzugt im Server abgearbeitet. Dabei wird bevorzugt zunächst auf dem Server ein Server-Schlüsselgrundwert $X_2$ berechnet. In einem weiteren Schritt erfolgt ein (vom Client) unabhängiges Berechnen des kryptografischen Hilfskeys *k* aus dem Server-Schlüsselgrundwert $X_2$ und bevorzugt aus der ersten Hilfszahl $s_1$, die vom Client bevorzugt übertragen wurde. Bevorzugt erfolgt die Berechnung mittels einer Schlüssel-Ableitfunktion (Key Derivation Function).

In einem weiteren Schritt kann auf dem Server ein unabhängiges Berechnen des in einem der vorherigen Schritte auf dem Client verwendeten Client-Auth-Keys *A,* also des Client-Authentifizierschlüssels, erfolgen. Dieses Berechnen geschieht bevorzugt durch Entschlüsselung des empfangenen ersten Authentifizier-Crypto-Wertes $c_1$ mittels des Hilfskeys *k,* der zuvor berechnet wurde. Hierbei wird bevorzugt eine Entschlüsselungsfunktion verwendet, die mit der Verschlüsselungsfunktion korrespondiert, die auf dem Client zur Erzeugung des Authentifizier-Crypto-Wertes $c_1$ verwendet wurde.

Ein bevorzugter Schritt umfasst das Generieren eines zufälligen privaten Server-Authentifizierwertes *b*, aus dem ein öffentlicher Server-Authentifizierschlüssel (Server-Auth-Key) *B* erzeugt wird. Vorzugsweise erfolgt das Erzeugen des Server-Auth-Keys *B* mittels des Parameters *g* der mathematischen Gruppe *G,* wobei gilt:

$$B = g^b \; mod \; p$$

Für die weitere Berechnung wird eine weitere, öffentliche Hilfszahl (2. Hilfszahl) $s_2$ gewählt. Dies ist bevorzugt ebenfalls eine Zufallszahl. Es folgt die Berechnung eines Schlüsselpaars mit zwei Basisschlüsseln $k_{DH1}$, $k_{DH2}$ aus dem Client-Authentifizierschlüssel (Client-Auth-Key) *A,* dem Client-Passwort-Verifikationswert *v*, dem Server-Passwort-Ableitwert *y* und der zweiten Hilfszahl $s_2$. Bevorzugt erfolgt die Berechnung mittels einer Schlüssel-Ableitfunktion. Besonders bevorzugt wird bei der Berechnung der Client-Authentifizierschlüssel *A* *b*-fach und der Client-Passwort-Verifikationswert *v* *y*-fach mit sich selbst verknüpft, wobei der Server-Authentifizierwert *b* zuvor bevorzugt als Zufallszahl gewählt wurde.

Nachdem die Basisschlüssel $k_{DH1}$ und $k_{DH2}$ auf dem Server zur Verfügung stehen, wird für den Client-Basisschlüssel $k_{DH1}$ ein Schlüsselverifizierer (Schlüsselverifizierwert) $k_1$ berechnet. Vorzugsweise erfolgt die Berechnung ebenfalls durch Verwendung des Parameters *g* der mathematischen Gruppe *G*. Nach der Erzeugung des Schlüsselverifizierwerts $k_1$ wird der Basisschlüssel $k_{DH1}$ für den Client auf dem Server (sicher) gelöscht. Die Schlüsselbasis $Sb_s$ für den Server wird aus dem Basisschlüssel $k_{DH2}$ des Servers und dem Schlüsselverifizierwert $k_1$ (für den Basisschlüssel $k_{DH1}$ des Clients) gebildet.

Anschließend wird bevorzugt ein zweiter Authentifizier-Crypto-Wert $c_2$ gebildet, besonders bevorzugt durch Verschlüsselung des Server-Authentifizierschlüssels (Server-Auth-Key) *B* mittels des Hilfskeys *k.* Bevorzugt wird eine Verschlüsselungsfunktion angewendet, wobei die Verschlüsselungsfunktion eine allgemein bekannte Funktion sein kann.

Nach Erzeugung des zweiten Authentifizier-Crypto-Wertes $c_2$ wird dieser gemeinsam mit der zweiten Hilfszahl $s_2$ an den Client übermittelt.

Im Client erfolgt nun ein unabhängiges Berechnen des Server-AuthentifizierSchlüssels (Server-Auth-Key) *B* durch Entschlüsselung des empfangenen (zweiten) Authentifizier-Crypto-Wertes $c_2$ mittels des (eigenen) Hilfskeys *k,* der ebenfalls auf dem Client vorhanden ist und in einem vorherigen Schritt berechnet wurde. Zur Berechnung des Server-Auth-Keys $B$ wird bevorzugt eine Entschlüsselungsfunktion verwendet. Sie kann allgemein bekannt sein und mit der auf dem Server verwendeten Verschlüsselungsfunktion korrespondieren.

Ein weiterer Schritt umfasst das Berechnen eines Schlüsselpaares mit den zwei Basisschlüsseln $k_{DH1}$ und $k_{DH2}$ in dem Client. Dies erfolgt bevorzugt mittels einer Schlüssel-Ableitfunktion. Die Basisschlüssel werden aus dem Server-Auth-Key $B$, der bevorzugt $a$-fach mit sich selbst verknüpft wird, dem Server-Passwort-Verifikationswert $w$, der bevorzugt $x$-fach mit sich selbst verknüpft wird und aus der zweiten Hilfszahl $s_2$, die vom Server übermittelt wurde, gebildet. Der verwendete Client-Authentifizierwert $a$ ist bevorzugt auf dem Client ausgewählt und privat und $x$ ist der Client-Passwort-Ableitwert.

Nachdem die Basisschlüssel $k_{DH1}$ und $k_{DH2}$ berechnet wurden, wird nun der Schlüsselverifizierwert (Schlüsselverifizierer) $k_2$ aus dem Basisschlüssel $k_{DH2}$ des Servers berechnet. Nachdem der Schlüsselverifizierer $k_2$ ermittelt wurde, wird der Basisschlüssel $k_{DH2}$ gelöscht. Nun wird die Client-Schlüsselbasis $Sb_c$ im Client gebildet, die den Client-Basisschlüssel $k_{DH1}$ sowie den Schlüsselverifizierwert $k_2$ für den Basisschlüssel des Servers umfasst.

Am Ende dieser Verfahrensschritte verfügen sowohl der Client als auch der Server über eine jeweils korrespondierende (konjugierte) Schlüsselbasis mit einem eigenen Basisschlüssel sowie einem Schlüsselverifizierwert des Kommunikationspartners. Aus dieser Schlüsselbasis lassen sich nun in weiteren Schritten die Sitzungsschlüssel für die einzelnen Applikationen und Anwendungen bzw. Programmen auf den Client und für die Kommunikation über einen ungesicherten Kommunikationsweg zwischen Server und Client berechnen.

Während der Berechnung der Schlüsselbasis werden mehrfach Daten zwischen Client und Server übertragen. Im Verlauf dieser Übertragungen finden direkt Authentifizierungen statt, mittels denen der Kommunikationspartner die Authentizität seines Gegenübers verifizieren kann. Ist beispielsweise der Authentifizier-Crypto-Wert $c_1$ manipuliert, ist keine Entschlüsselung möglich. So kann festgestellt werden, dass die Übertragung beeinflusst war. Öffentliche Parameter, wie beispielsweise der übertragene Server-ID-Prüfkey $D$, werden mittels Prüfsummen auf Veränderung überprüft.

Auch der Client führt eine Verifikation der Authentizität des Servers und die Richtigkeit der übertragenen Daten durch. So ist beispielsweise der zweite Authentifizier-Crypto-Wert $c_2$ geeignet, die Authentizität des Servers zu überprüfen.

In einer weiteren bevorzugten Ausführungsform des erfindungsgemäßen Verfahrens schließt sich an die Erzeugung der Schlüsselbasis im Client und im Server bevorzugt eine Integritätsprüfung an. Diese umfasst vorzugsweise das Bilden einer ersten Prüfsumme $R_1$ im Client. Die Prüfsumme kann beispielsweise mittels einer Hash-Funktion gebildet werden. Bevorzugt werden hierzu spezifische Daten vom Client und vom Server verwendet, besonders bevorzugt werden der Client-Authentifizierwert $a$, der Server-Auth-Key $B$, der Client-ID-Prüfkey $C$, der Server-ID-Prüfwert $d$ verwendet. Ebenso finden der Schlüsselverifizierwert $k_2$ des Basisschlüssels des Servers und der Basisschlüssel $k_{DH1}$ des Clients bevorzugt Anwendung. Bevorzugt werden die einzelnen Parameter direkt oder nach vorheriger Anwendung des mathematischen Parameters $g$ aneinandergehängt. Die ermittelte Prüfsumme $R_1$ wird dann vom Client an den Server übertragen.

Der Server bildet seinerseits eine Prüfsumme $R_2$, ebenfalls bevorzugt mittels einer Hash-Funktion. Die Prüfsumme $R_2$ umfasst bevorzugt seinerseits spezifische Daten vom Client und vom Server, über die der Server verfügt. Besonders bevorzugt werden Daten der Gruppe von Client-Auth-Key $A$, Server-Authentifizierwert $b$, Client-ID-Prüfwert $c$, Server-ID-Prüfkey $D$, Schlüsselverifizierwert $k_1$ für den Basisschlüssel des Clients und Basisschlüssel $k_{DH2}$ des Servers verwendet. Bevorzugt werden die einzelnen Parameter direkt oder nach vorheriger Anwendung des mathematischen Parameters $g$ aneinandergehängt.

Im nächsten Schritt werden im Server die beiden Prüfsummen $R_1$ und $R_2$ auf Gleichheit geprüft. Sind sie identisch, kann daraus geschlossen werden, dass die zur Berechnung benutzten Parameter nicht durch einen Man-in-the-Middle manipuliert worden sind.

Bevorzugt findet nun in weiteren Schritten die Ermittlung einer Prüfsumme $R_3$ auf dem Server statt. Diese Prüfsumme wird bevorzugt aus der zweiten, auf dem Server erzeugten Prüfsumme $R_2$ erzeugt. Bevorzugt wird die Prüfsumme $R_3$ aus dem Client-Auth-Key $A$, dem Server-Authentifizierwert $b$, sowie dem Basisschlüssel des Servers $k_{DH2}$ und dem Schlüsselverifizierwert $k_1$ für den Basisschlüssel des Clients gebildet. Bevorzugt wird eine Hash-Funktion verwendet und die einzelnen Parameter direkt oder nach vorheriger Anwendung des mathematischen Parameters $g$ aneinandergehängt.

In einem weiteren Schritt wird die dritte Prüfsumme $R_3$ an den Client übermittelt. Der Client kann eine vierte Prüfsumme $R_4$ aus der Prüfsumme $R_1$, die bevorzugt in einem vorherigen Schritt auf dem Client berechnet wurde, ermitteln. Bevorzugt werden auch Daten aus der Gruppe von Client-Authentifizierwert $a$, Server-Auth-Key $B$, Basisschlüssel des Clients $k_{DH1}$ und Schlüsselverifizierwert $k_2$ für den Basisschlüssel des Servers benutzt. Vorzugsweise wird auch zur Bildung der vierten Prüfsumme $R_4$ eine Hash-Funktion verwendet und die einzelnen Parameter direkt oder nach vorheriger Anwendung des mathematischen Parameters $g$ aneinandergehängt. In einem abschließenden Schritt werden die beiden Prüfsummen $R_3$ und $R_4$ im Client auf Gleichheit geprüft.

Bei fehlender Gleichheit von $R_1$ und $R_2$ bei der Prüfung auf dem Server oder bei Ungleichheit von $R_3$ und $R_4$

bei der Überprüfung auf dem Client, wird das Schlüsselerzeugungsverfahren bevorzugt abgebrochen. Bevorzugt werden die Schlüsselbasen $Sb_c$ und $Sb_s$ mitsamt den Basisschlüsseln und Schlüsselverifizierwerten gelöscht. Das Verfahren zur Erzeugung einer Schlüsselbasis muss von neuem gestartet werden.

Liegen die Schlüsselbasen vor, kann die Erzeugung der jeweils benötigten Sitzungsschlüssel für die einzelnen Applikationen erfolgen. Dabei können mit den Schlüsselbasen mehrere Sitzungsschlüssel für eine Vielzahl von Applikationen oder Programmen generiert werden, bevorzugt mittels der folgenden Schritte:

Zunächst wird der Identitätswert *ID* (Client-ID) des Clients an den Server übermittelt. Der Server wählt die zur Client-Identität passende Schlüsselbasis $Sb_s$ aus, die in vorherigen Verfahrensabläufen mit dem Client ermittelt wurde. Die verwendete Schlüsselbasis enthält den Schlüsselverifizierwert des Basisschlüssels des Clients und muss deshalb zu dem Client passen. Des Weiteren wählt der Server den Server-Passwort-Ableitwert y aus.

In einem weiteren Schritt wird bevorzugt auf dem Server ein Client-ID-Prüfkey $\overline{C}$ aus einem frei wählbaren Client-ID-Prüfwert $\overline{c}$ ermittelt, bevorzugt mittels eines mathematischen Parameters *g* aus der mathematischen Gruppe *G*, die Grundlage für das Verfahren ist. Der berechnete Client-ID-Prüfkey $\overline{C}$ wird bevorzugt vom Server an den Client übertragen.

Des Weiteren wird in dem Client ein Client-Grundwert $X_3$ ermittelt. In einem weiteren Schritt wird ein Sitzungsschlüssel $k_{Sitzung}$ und optional ein Signaturschlüssel $k_{Signatur}$ für den Client berechnet, bevorzugt mittels einer Ableitfunktion, beispielsweise einer Key Derivation Function. Der Sitzungsschlüssel $k_{Sitzung}$ wird aus dem Client-Grundwert $X_3$ und bevorzugt einer frei wählbaren zufälligen Hilfszahl $s_3$ berechnet.

Der Client übermittelt bevorzugt an den Server die frei wählbare Hilfszahl $s_3$ sowie einen Server-ID-Prüfkey $\overline{D}$, der aus dem frei wählbaren Server-ID-Prüfwert $\overline{d}$ ermittelt werden kann.

Des Weiteren wird ein Server-Grundwert $X_4$ im Server erzeugt oder berechnet. Aus diesem Server-Grundwert $X_4$ und bevorzugt der übertragenen Hilfszahl $s_3$ wird nun auf dem Server unabhängig vom Client der Sitzungsschlüssel $k_{Sitzung}$ und optional ein Signaturschlüssel $k_{Signatur}$ für den Server berechnet. Bevorzugt erfolgt dies je mit einer Schlüssel-Ableitfunktion (Key Derivation Function). Die Sitzungsschlüssel des Clients und des Servers sind jeweils identisch, wenn keine Beeinflussung und Korruption der Übertragung stattgefunden hat. Gleiches gilt für den optionalen Signaturschlüssel.

Die Berechnung der Grundwerte, also von Client-Schlüsselgrundwert $X_1$, Server-Schlüsselgrundwert $X_2$, Client-Grundwert $X_3$ und Server-Grundwert $X_4$, erfolgen bevorzugt auf Grundlage von Parametern und Werten, den dem Server bzw. Client zum Berechnungszeitpunkt zur Verfügung stehen und gegebenenfalls von dem anderen Kommunikationspartner übertragen wurden. Dabei werden bevorzugt statische Werte oder nur kurzzeitig gültige Werte verwendet, sogenannte Ephemeral-Werte (kurzlebig). Während statisch (static) bedeutet, dass der Wert bzw. Parameter bei der Berechnung eines neuen Grundwerts erneut verwendet werden kann und denselben Wert aufweist, beispielsweise, weil er sich aus dem Client-Passwort ableitet, existieren die ephemeral Werte oder Parameter nur während der Dauer einer Berechnung und werden anschließend verworfen oder bevorzugt gelöscht. Bei einer erneuten Berechnung werden bevorzugt zufällig neue Werte gewählt.

Die statischen Werte stellen bevorzugt eine Authentifizierung zur Verfügung. Die ephemeral Werte sorgen bevorzugt dafür, dass sich für die Schlüsselbasen und Sitzungsschlüssel nach jeder neuen Berechnung andere Werte ergeben, die auf Client- und Serverseite unabhängig voneinander berechnet wurden. Dies hat den Vorteil, dass durch einen gestohlenen Schlüssel nur der damit verbundenen Kommunikationsvorgang kompromittiert wird. Somit lässt sich eine sogenannte forward secrecy implementieren. Selbstverständlich ließe sich bei der Berechnung der Grundwerte auch eine Kombination von statischen Werten und ephemeral Werten verwenden.

Der Signaturschlüssel $k_{Signatur}$ wird bevorzugt im Zuge des Austauschs der Prüfsummen eingesetzt und zur Schlüsselbestätigung zwischen Client und Server verwendet, um einen möglicherweise erfolgten Man-in-the-Middle-Angriff zu erkennen und abzuwehren.

Deutlich zu erkennen ist, dass die Berechnung des Sitzungsschlüssels und optionalen Signaturschlüssels auf wenigen Verfahrensschritten beruht und nur wenige Parameter benötigt. Dies hat den Vorteil, dass Sitzungsschlüssel und optionale Signaturschlüssel schnell und einfach berechnet werden können, insbesondere ohne große Rechenkapazität auf dem Server oder Client vorauszusetzen. Durchführen des erfindungsgemäßen Verfahrens führt zu kryptografisch robusten Sitzungsschlüsseln und optionalen Signaturschlüsseln.

Bevorzugt sind die verwendeten Sitzungsschlüssel und optionalen Signaturschlüssel zeitlich limitiert. Die Sitzungsschlüssel und optionalen Signaturschlüssel können beispielsweise nach Ablauf einer vorgegebenen Zeit, die bevorzugt frei wählbar sein kann, verfallen. Besonders bevorzugt werden die Sitzungsschlüssel und optionalen Signaturschlüssel nach Ablauf einer Zeitspanne gelöscht.

Eine Löschung der Sitzungsschlüssel kann auch dann erfolgen, wenn die Sitzung zwischen einem Client und einem Server bzw. die Kommunikation zwischen den beiden Kommunikationspartnern beendet oder unterbrochen wird oder für eine bestimmte Zeit ruht und keine Datenübertragung stattfindet.

An die Erzeugung des Sitzungsschlüssels und optionalen Signaturschlüssels im Client wie im Server schließt sich bevorzugt eine Integritätsprüfung an. Hierzu wird im Client aus dem Basisschlüssel des Clients $k_{DH1}$ und dem Schlüsselverifizierwert $k_2$ für den Basisschlüssel des Servers eine Prüfsumme $R_5$ gebildet. Bevorzugt werden bei der Bildung der Prüfsumme $R_5$ auch der Client-ID-Prüfkey $\overline{C}$ und der Server-ID-Prüfwert $\overline{d}$ verwendet. Die Bildung der Prüfsumme erfolgt bevorzugt mittels einer Hash-Funktion, optional mittels des Signaturschlüssels. Die Prüfsumme $R_5$ wird anschließend an den Server übertragen und hier zum Vergleich mit einer weiteren Prüfsumme $R_6$ genutzt. Zunächst wird die Prüfsumme $R_6$ im Server aus dem Basisschlüssel des Servers $k_{DH2}$ und dem Schlüsselverifizierwert $k_1$ für den Basisschlüssel des Clients, berechnet. Zusätzlich können der Client-ID-Prüfwert $\overline{c}$ und der Server-ID-Prüfkey $\overline{D}$ verwendet werden. Die Berechnung erfolgt bevorzugt ebenfalls mittels einer Hash-Funktion, bevorzugt optional mittels des Signaturschlüssels. Die einzelnen Parameter werden direkt oder nach vorheriger Anwendung des mathematischen Parameters $g$ aneinandergehängt.

Ergibt der Vergleich der beiden Prüfsummen $R_5$ und $R_6$ im Server eine Abweichung, d.h. sind die beiden Prüfsummen nicht identisch, so wird das Verfahren abgebrochen.

Bei Gleichheit von $R_5$ und $R_6$ berechnet der Server bevorzugt eine weitere Prüfsumme $R_7$, wobei für die Berechnung der Client-ID-Prüfwert $\overline{c}$ und der Server-ID-Prüfkey $\overline{D}$, die Prüfsumme $R_6$, die ebenfalls im Server berechnet wurde, sowie der Basisschlüssel des Servers $k_{DH2}$ und der Schlüsselverifizierwert $k_1$ für den Basisschlüssel des Clients verwendet werden. Bevorzugt erfolgt die Ermittlung der Prüfsumme $R_7$ ebenfalls mittels einer Hash-Funktion, optional mittels des Signaturschlüssels, besonders bevorzugt auch unter Verwendung des Gruppenparameters $g$.

Anschließend wird die Prüfsumme $R_7$ an den Client-Rechner übertragen. Der Client-Rechner empfängt die Prüfsumme $R_7$ und vergleicht sie mit einer weiteren Prüfsumme $R_8$, die im Client-Rechner berechnet wird. Die Prüfsumme $R_8$ wird aus dem Client-I D-Prüfkey $\overline{C}$ und dem Server-I D-Prüfwert $\overline{d}$, der zuvor auf dem Client berechneten Prüfsumme $R_5$, sowie der Basisschlüssel des Clients $k_{DH1}$ und der Schlüsselverifizierwert $k_2$ für den Basisschlüssel des Servers berechnet, vorzugsweise erneut mittels einer Hash-Funktion, optional mittels des Signaturschlüssels. Die einzelnen Parameter werden direkt oder nach vorheriger Anwendung des mathematischen Parameters $g$ aneinandergehängt.

Sind sowohl die Prüfsummen $R_5$ und $R_6$, als auch die Prüfsummen $R_7$ und $R_8$ gleich, dann wurden keine Parameter bei der Übertragung vom Server verändert, beispielsweise durch einen Man-in-the-Middle-Angriff. Der auf Client und Server berechnete Sitzungsschlüssel $k_{Sitzung}$ kann für weitere Verschlüsselungen und Entschlüsselungen sowie für die Kommunikation mit dem Server bzw. dem Client verwendet werden.

Wird eine fehlende Gleichheit von $R_5$ und $R_6$ oder von $R_7$ und $R_8$ festgestellt, erfolgt bevorzugt ein Abbruch des Verfahrens. Der berechnete Sitzungsschlüssel $k_{Sitzung}$ kann nicht verwendet werden. Die Schlüsselberechnung muss erneut erfolgen.

Das erfindungsgemäße Verfahren ist insgesamt sehr gut geeignet in Umgebungen, in denen ein Benutzer sowohl Zugriff auf den Client-Rechner als auch auf den Server-Rechner hat. Beispielsweise kann das erfindungsgemäße Verfahren insbesondere im Bereich der Automatisierung von Gebäuden oder Haushalten, sogenannte Smart Home-Anwendungen eingesetzt werden. Zum Beispiel lassen sich Steuerungen für einzelne Aktoren, wie Rollladensteuerung oder Heizungssteuerung oder Überwachung von Alarmanlagen mittels eines zentralen Heim-Servers regeln. Der Benutzer kann die einzelnen Aktoren über einen Client-Computer steuern und verändern. Dies kann auch über ein mobiles Gerät, sogenanntes Handheld-Gerät erfolgen, beispielsweise über einen Tablet-Computer oder ein Mobiltelefon oder ein anderes mobiles Gerät, was beispielsweise mit dem WLAN des Gebäudes oder Haushalts verbunden ist. Über das Mobilgerät lassen sich dann Steuerungen vornehmen oder Daten abrufen. Die Kommunikation zwischen dem Mobilgerät (Client-Rechner) und dem Server zur Steuerung der entsprechenden Anlagen (Rollladen, Heizung, automatisierte Geräte wie Waschmaschine etc.) erfolgt verschlüsselt mittels des Verfahrens. Da die Übertragung in drahtlosen oder ungeschützten Netzwerken (z.B. WLAN oder Internet) in der Regel nur schwach oder nicht geschützt ist, ist prinzipiell ein Eindringen und eine Manipulation der Verbindung von Geräten möglich. Um diese Man-in-the-Middle-Angriffe oder Manipulationen auszuschließen, kann die Verschlüsselung und gleichzeitige Authentisierung zwischen den beiden Kommunikationspartnern stattfinden. Die einzelnen Programme und Applikationen auf dem Client-Rechner (z. B. Mobilgerät) verwenden bevorzugt eigene Sitzungsschlüssel, um mit dem Server zu kommunizieren. Beispielsweise kann eine Applikation zur Rollladensteuerung einen Sitzungsschlüssel erzeugen und verwenden, der verschieden ist von einem Sitzungsschlüssel, den eine Heizungssteuerungsapplikation verwendet. Auf dem Server sind beide Sitzungsschlüssel (also der Schlüssel der Heizungssteuerung wie auch der Schlüssel der Rollladensteuerung) hinterlegt und werden entsprechend verwendet.

Das erfindungsgemäße Verfahren lässt sich beispielsweise auch für die Steuerung und Regelung von Alarmanlagen einsetzen. Beispielsweise können Zustandswerte von Sensoren wie etwa eines Türsensors, eines Raumüberwachungssensors oder eines Fenstersensors abgerufen werden, damit ein Benutzer mit einem mobilen Gerät überprüfen kann, ob beispielsweise alle Fenster geschlossen sind. Es ist auch möglich, eine Anlage ein- oder auszuschalten. Daneben lassen sich auch intelligente Lichtsteuerungen durchführen, so können beispielsweise Lichter ein- oder ausgeschaltet werden. Auch kann eine Kommunikation die Übertragung von Kamerabildern aus einem Gebäude an ein Mobilgerät umfassen.

Selbstverständlich ist das erfindungsgemäße Verfahren nicht auf ein lokales Netzwerk (drahtgebunden, wired oder drahtlos, wireless) wie beispielsweise ein drahtloses Netzwerk (WLAN) beschränkt. Eine Kommunikation über das Internet oder drahtlos via Mobilfunk oder andere, vorzugsweise drahtlose Kommunikationskanäle ist ebenfalls möglich. Prinzipiell könnte es auch für Satellitenverbindungen eingesetzt werden.

Die vorliegende Erfindung wird anhand der beigefügten Figuren näher beschrieben. Es zeigen:

Figur 1     ein Schaubild zur Berechnung der Schlüsselbasis auf dem Client und dem Server sowie den Austausch von Parametern und Informationen zwischen den beiden Kommunikationspartner; und

Figur 2     ein Prinzipschaubild zur Erzeugung der Sitzungsschlüssel auf dem Client und dem Server sowie die Kommunikation zwischen den Kommunikationspartnern einschließlich der Erzeugung von Prüfsummen zur Verifikation.

Vor Durchführung des erfindungsgemäßen Verfahrens müssen sowohl dem Client-Rechner als auch dem Server-Rechner einige Informationen bekannt sein.

Auf dem Server-Rechner muss ein Identifikationswert $ID$ des Clients hinterlegt sein, der bei der Registrierung auf dem Server hinterlegt wurde. Der Server muss auch über eine dem Client zugeordnete Hilfszahl $ps$ sowie eine dem Server zugeordnete Hilfszahl $ps_{Auth}$ verfügen. Die Hilfszahlen sind Zufallszahlen und frei wählbar.

Beim Server-Start wird bevorzugt aus einem Server-Passwort $pw_{Auth}$, das beispielsweise durch einen Administrator auf dem Server hinterlegt wird, ein Ableitwert $y$, der sogenannte Server-Passwort-Ableitwert $y$ berechnet. Der Server muss auch einen Client-Passwort-Verifikationswert $v$ für das Passwort des Clients kennen. Dieser Client-Passwort-Verifikationswert $v$ wird bevorzugt auf dem Server bei der Benutzerregistrierung am Server erzeugt, beispielsweise mittels einer Ableitfunktion.

Sowohl dem Server als auch dem Client müssen der für die Verschlüsselung notwendige mathematische Parameter $g$ einer mathematischen Gruppe G, sowie ein weiterer mathematischer Parameter $p$, bekannt sein, die sowohl im Client als auch im Server verwendet werden. Die Sicherheit des erfindungsgemäßen Verfahrens beruht darauf, dass es keinen effizienten Algorithmus gibt, um in der benutzten mathematischen Gruppe den sogenannten diskreten Logarithmus zu berechnen, um Rückschlüsse auf die mit dem Gruppenparameter $g$, sowie des weiteren Parameters $p$ berechneten bzw. als Eingangsparameter verwendeten Werte ziehen zu können.

Auf dem Client-Rechner müssen neben dem Gruppenparameter $g$ und des weiteren Parameters $p$ der Identifikationswert $ID$ sowie ein Verifikationswert $w$ für das Server-Passwort hinterlegt sein. Dieser Server-Passwort-Verifikationswert $w$ wird bevorzugt am Client während der Serverregistrierung erzeugt. Der Client muss bevorzugt auch über einen zuvor berechneten Client-Passwort-Ableitwert $x$ verfügen, der aus dem Passwort $pw$ des Clients berechnet wurde. Bevorzugt erfolgt die Berechnung des Client-Passwort-Ableitwertes $x$ mittels einer Zufallszahl $ps$, besonders bevorzugt mittels einer Hash-Funktion.

Der Server-Passwort-Verifikationswert $w$ kann wahlweise bei Erstdurchführung des Verfahrens aus dem Passwort des Servers $pw_{Auth}$, beispielsweise durch Eingabe des Wertes durch einen Benutzer auf dem Client-Rechner, und aus der Zufallszahl $ps_{Auth}$ des Servers auf dem Client berechnet werden. Der Server kann die Zufallszahl $ps_{Auth}$ hierfür bekanntgeben, ohne dass dadurch die Sicherheit des Verfahrens beeinträchtigt wird. Nach der Berechnung des Server-Passwort-Verifikationswerts $w$ wird bevorzugt sichergestellt, dass auf dem Client keine wiederherstellbare Form des Server-Passworts $pw_{Auth}$ existiert. Der Server-Passwort-Verifikationswert $w$ des Passworts des Servers muss bei Änderung des Server-Passworts $pw_{Auth}$ neu berechnet werden, beispielsweise dann, wenn der Server mit geänderten Werten neu gestartet wird.

Bevorzugt können dem Client-Rechner folgende Werte bekannt sein, nämlich die Zufallszahlen oder Hilfszahlen $ps$ (Zufallszahl auf dem Client) und $ps_{Auth}$, die Zufallszahl, die auf dem Server zur Berechnung des Server-Passwort-Ableitwertes $y$ verwendet wird. Falls der Client die beiden Hilfszahlen $ps$, $ps_{Auth}$ nicht kennt, können sie vom Server bekannt gegeben werden. Eine öffentliche Bekanntgabe beeinflusst die Sicherheit des Verfahrens nicht negativ.

Bevorzugt darf der Server keine Kenntnisse über das Benutzerpasswort des Clients (Passwort des Clients) $pw$ oder den daraus errechneten Client-Passwort-Ableitwert $x$ haben. Der Client selbst darf bevorzugt keine Kenntnisse über das Server-Passwort $pw_{Auth}$ oder den daraus berechneten Server-Passwort-Ableitwert $y$ haben, nachdem der Verifizierwert $w$ des Server-Passworts berechnet wurde.

Die hier beschriebenen bevorzugten Basisdaten, die auf dem Client und Server vorzugsweise hinterlegt sind, können als Grundlage für die Durchführung des erfindungsgemäßen Verfahrens dienen. Das Verfahren ist erfindungsgemäß in zwei Teile unterteilt, nämlich in das Berechnungsverfahren zur Erzeugung der Schlüsselbasis und in den Verfahrensteil zur Erzeugung der Sitzungsschlüssel für die eigentliche Kommunikation zwischen den Kommunikationspartnern, die später von Programmen und Applikationen durchgeführt wird.

Zunächst wird gemäß dem Verfahren die Berechnung der Schlüsselbasis durchgeführt, bei dem die Identität beider Kommunikationspartner gegenüber dem jeweils anderen Kommunikationspartner sichergestellt und mittels Berechnungen in einer mathematischen Gruppe G eine gemeinsame Schlüsselbasis ausgehandelt wird. Auf Grundlage der Schlüsselbasis wird dann im zweiten Teil des erfindungsgemäßen Verfahrens die Berechnung der Sitzungsschlüssel für einzelne Kommunikationsvorgänge zwischen den Kommunikationspartnern abgeleitet, wobei hierbei die Kenntnis der jeweilig zur Gegenseite gehörenden Schlüsselbasis nachgewiesen wird.

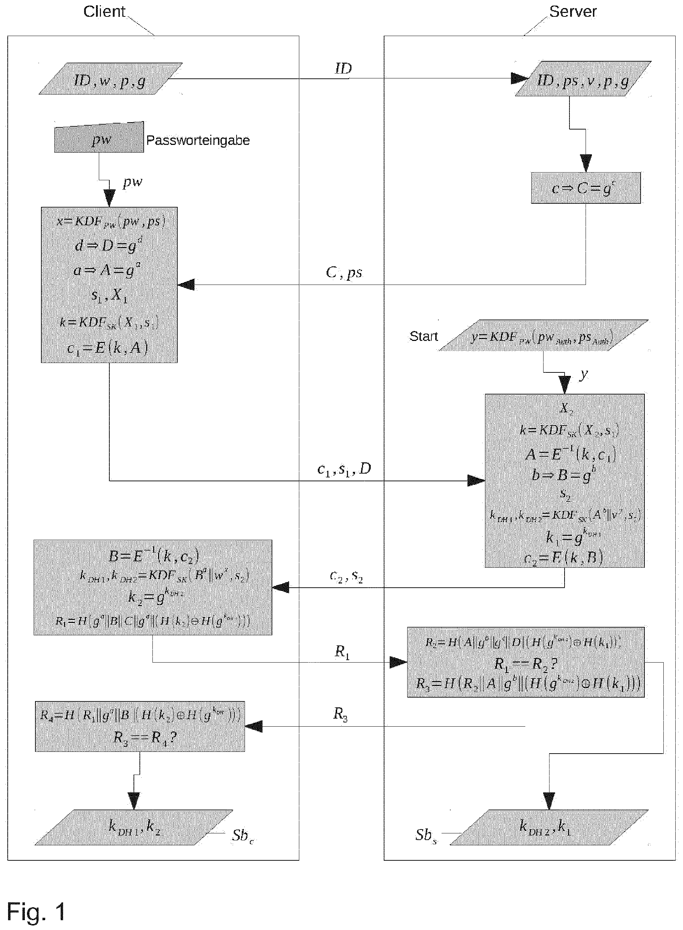

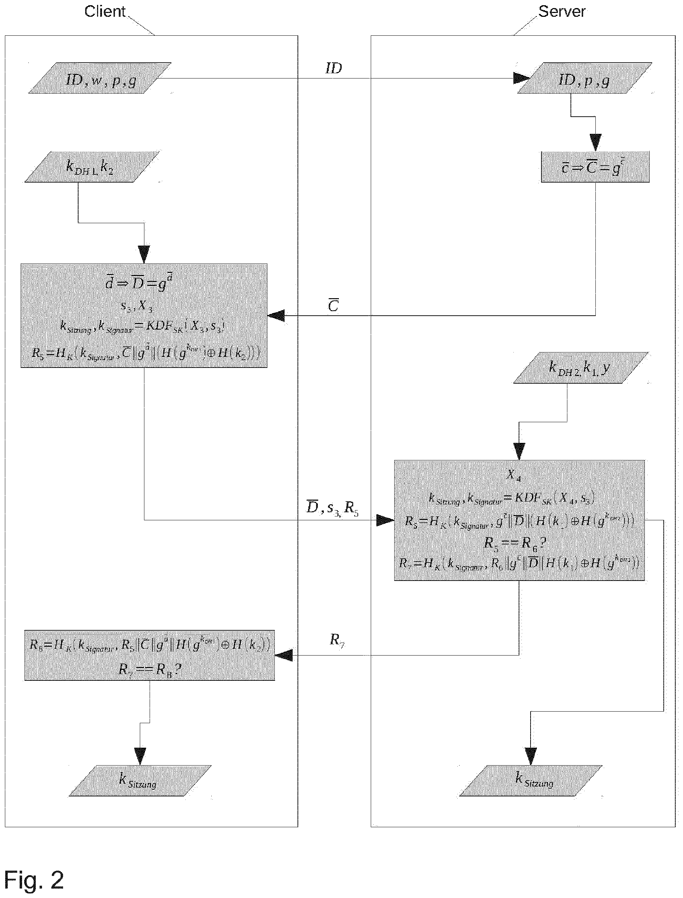

Gemäß dem bevorzugten Ablaufschema aus Figur 1 ist das Verfahren zur Berechnung der Schlüsselbasis in mehrere sogenannte Kommunikationsrunden unterteilt, die seriell abgearbeitet werden. Die Kommunikationsrunden werden nun zunächst stichwortartig beschrieben. In den Figuren 1 und 2 ist der Client jeweils links und der Server rechts dargestellt.

1. Kommunikationsrunde:

Bevorzugt finden in der ersten Kommunikationsrunde folgende Schritte statt:

Der Client:

- Stellt den Benutzernamen bzw. Identifikationswert *ID* der eigenen Identität (Client Identität) zur Verfügung und übermittelt ihn an den Server.

Der Server:

- Stellt die zu *ID* passende Identität und die dieser Identität zugeordneten Werte *ps* und *v* fest.
- Wählt einen zufälligen privaten Zufallsschlüssel, den Client-ID-Prüfwert *c.*
- Berechnet einen öffentlichen Zufallsschlüssel, nämlich den Client-ID-Prüfkey $C = g^c\ mod\ p$, wobei *g* ein öffentlicher Parameter der mathematischen Gruppe *G* und *p* ein weiterer öffentlicher mathematischer Parameter ist.
- Der Server übermittelt an den Client: *C* und falls notwendig auch *ps.*

2. Kommunikationsrunde:

Bevorzugt finden in der zweiten Kommunikationsrunde folgende Schritte statt:

Der Client:

- Berechnet nach Eingabe von *pw* den Ableitwert $x = KDF_{PW}(pw,ps)$.
- Erzeugt einen privaten Zufallsschlüssel, den Server-ID-Prüfwert *d.*
- Berechnet einen öffentlichen Zufallsschlüssel, den Server-ID-Prüfkey $D = g^d\ mod\ p$, wobei *g* der gleiche öffentliche Parameter der mathematischen Gruppe *G* und *p* der gleiche öffentliche mathematische Parameter ist, die auch der Server verwendet.
- Erzeugt privaten Zufallsschlüssel, den Client-Authentifizierwert *a.*
- Berechnet einen öffentlichen Zufallsschlüssel, den Client-Auth-Key $A = g^a\ mod\ p$.
- Wählt bevorzugt eine zufällige, öffentliche Hilfszahl $s_1$.
- Berechnet einen Client-Schlüsselgrundwert $X_1$.
- Bestimmt aus $X_1$ einen Hilfsschlüssel *k,* bevorzugt durch $k = KDF_{SK}(X_1,s_1)$, wobei *KDF* eine Schlüsselableitfunktion ist.
- Berechnet einen chiffrierten Wert, den Authentifizer-Crypto-Wert $c_1 = E(k,A)$, wobei *E* eine Verschlüsselungsfunktion ist, oder der Client berechnet alternativ, aber auch bevorzugt, die Signatur des öffentlichen Zufallsschlüssels (Client-Auth-Key) *A,* nämlich bevorzugt durch $h_A = H_K(k,A)$.
- Der Client übermittelt an den Server die Werte $c_1$, $s_1$, *D* bzw. alternativ $A, h_A, s_1, D$.

Der Server:

- Stellt den beim Serverstart berechneten Server-Passwort-Ableitwert $y = KDF_{PW}(pw_{Auth}/ps_{Auth})$ des Serverpassworts zur Verfügung.
- Berechnet einen zweiten Schlüsselgrundwert, den Server-Schlüsselgrundwert $X_2$. Der Server-Schlüsselgrundwert ist bevorzugt gleich dem Client-Schlüsselgrundwert.
- Bestimmt Hilfsschlüssel $k$ durch $k = KDF_{SK}(X_2, s_1)$.
- Entschlüsselt den öffentlichen Zufallsschlüssel Client-Auth-Key $A$ aus dem Authentifizier-Crypto-Wert $c_1$ durch: $A = E^{-1}(k, c_1)$, wobei $E^{-1}$ eine zu der Verschlüsslungsfunktion $E$ korrespondierende Entschlüsselungsfunktion ist.

Oder alternativ:

◦ Der Server berechnet die Signatur des öffentlichen Zufallsschlüssels Client-Auth-Key $A$ durch: $h_{As} = H_K(k, A)$ und überprüft dann, ob die Werte $h_A$ und $h_{As}$ identisch sind.
◦ Wählt privaten Zufallsschlüssel, den Server-Authentifizier-Wert $b$.
◦ Berechnet bevorzugt einen öffentlichen Zufallsschlüssel, den Server-Auth-Key $B = g^b\ mod\ p$.

- Wählt bevorzugt eine zufällige, öffentliche Hilfszahl $s_2$.
- Berechnet ein Basisschlüsselpaar $(k_{DH1}, k_{DH2})$ mittels: $k_{DH1}, k_{DH2} = KDF_{SK}(A^b\ mod\ p \parallel w^y\ mod\ p, s_2)$.
- Die Schlüsselableitfunktion $KDF_{SK}$ leitet zwei vollwertige, unabhängige kryptografische Schlüssel mit gewünschter Länge aus dem Eingabematerial ab.
- In einem weiteren Schritt berechnet der Server den Schlüsselverifizierwert $k_1 = g^{k_{DH1}}\ mod\ p$ für den Basisschlüssel des Clients und löscht bevorzugt den Basisschlüssel $k_{DH1}$ (des Clients), bevorzugt unmittelbar nach Berechnung von $k_1$.
- Der Server berechnet nun einen chiffrierten Server-Crypto-Wert $c_2 = E(k, B)$

◦ Oder alternativ die Signatur des öffentlichen Zufallsschlüssels Server-Auth-Key $B$ mittels: $h_{Bs} = H_K(k, B)$.

- Der Server übermittelt dann an den Client: $c_2, s_2$ bzw. $B$ , $h_{Bs}, s_2$.

3. Kommunikationsrunde:

Bevorzugt finden folgende Schritte statt:

Der Client:

- Entschlüsselt den öffentlichen Zufallsschlüssel Server-Auth-Key $B$ aus dem zweiten Authentifizier-Crypto-Wert $c_2$ mittels: $B = E^{-1}(k, c_2)$, wobei $k$ der Hilfsschlüssel ist, den der Client zuvor berechnet hat.

◦ Alternativ berechnet der Client die Signatur des öffentlichen Zufallsschlüssels Server-Auth-Keys $B$ mittels: $h_B = H_K(k, B)$, wobei $H$ eine Keyed-Hash-Funktion ist, und überprüft dann, ob $h_B$ und $h_{Bs}$ identisch sind.

- In einem weiteren Schritt berechnet der Client ebenfalls ein Basisschlüsselpaar $(k_{DH1}, k_{DH2})$ durch:

$$k_{DH1}, k_{DH2} = KDF_{SK}(B^a\ mod\ p \parallel w^x\ mod\ p, s_2).$$

Die Schlüsselableitfunktion (Key Deriviation Function) liefert also ebenfalls zwei Lösungen. Die Basisschlüssel $k_{DH1}$ und $k_{DH2}$ sind identisch zu denen, die im Server in der zweiten Kommunikationsrunde berechnet wurden.
- Der Client berechnet nun den zweiten Schlüsselverifizierwert für den Basisschlüssel des Servers durch $k_2 = g^{k_{DH2}}\ mod\ p$ und löscht bevorzugt den Basisschlüssel $k_{DH2}$ (des Servers), bevorzugt unmittelbar nach Berechnung von $k_2$.
- In einem weiteren optionalen Schritt berechnet der Client eine Prüfsumme
$R_1 = H(g^a\ mod\ p \| B \| C \| g^d\ mod\ p \| (H(k_2) \oplus H(g^{k_{DH1}}\ mod\ p)))$ und übermittelt sie an den Server.

Der Server:

- In einem weiteren optionalen Schritt berechnet der Server eine zweite Prüfsumme
$R_2 = H(A\|g^b \ mod \ p\|g^c \ mod \ p\|D\|(H(g^{kDH2} \ mod \ p) \oplus H(k_1)))$, wobei bevorzugt $H$ eine Hash-Funktion ist.
- Der Server überprüft dann, ob die Prüfsummen $R_1$ und $R_2$ gleich sind. Bei fehlender Gleichheit wird das Verfahren bevorzugt abgebrochen, da Werte oder Parameter während der Übertragung verändert worden sein könnten oder eine Manipulation der Übertragung z.B. durch einen Man-in-the-Middle stattgefunden haben könnte.
- Der Server berechnet bevorzugt nun eine dritte Prüfsumme $R_3 = H(R_2\|A\|g^b \ mod \ p \ \|(H(g^{kDH2} \ mod \ p) \oplus H(k_1)))$, wobei $H$ eine Hash-Funktion sein kann.
- Bevorzugt verwirft der Server nun alle benutzten Werte, außer der Server-Schlüsselbasis ($Sb_s$) des Servers, also den Server-Basisschlüssel $k_{DH2}$ und den Schlüsselverifizierwert $k_1$ für den Basisschlüssel des Clients.
- Die Prüfsumme $R_3$ übermittelt der Server an den Client.

4. Kommunikationsrunde (optional):

Der Client:

- Berechnet bevorzugt nun eine vierte Prüfsumme

$$R_4 = H(R_1\|g^a \ mod \ p\|B\|(H(k_2) \oplus H(g^{k_{DH1}} \ mod \ p))).$$

- Der Client überprüft bevorzugt, ob die Prüfsummen $R_3$ und $R_4$ gleich sind. Wird keine Gleichheit festgestellt, wird das Verfahren abgebrochen und alle Daten werden bevorzugt gelöscht, da eine Manipulation nicht ausgeschlossen werden kann.
- Bei Gleichheit der Prüfsummen $R_3$ und $R_4$ verwirft der Client nun bevorzugt alle benutzten Werte, außer der Client-Schlüsselbasis ($Sb_c$) des Clients, nämlich den Basisschlüssel des Clients $k_{DH1}$ und den Schlüsselverifizierwert $k_2$ für den Basisschlüssel des Servers.

Die obige stichwortartige Beschreibung der automatisierten Schlüsselberechnung der Basisschlüssel und der Schlüsselbasen für den Server und den Client gemäß Figur 1 wird nachfolgend nochmals erläutert.
Der eine Kommunikationspartner (der Client), der sich authentisieren will, sendet einen Identifikationswert *ID* an den anderen Kommunikationspartner, den Server. Der Server stellt alle mit der zugehörigen Identität verknüpften Werte für die weiteren Berechnungen zur Verfügung.
Der Server sendet einen ersten öffentlichen Client-ID-Prüfkey *C* an den Client und behält den zugehörigen privaten Client-ID-Prüfwert *c* bei sich. Dieser Schlüssel dient in der Folge zur Überprüfung, ob der Client über Kenntnis des Passwortes verfügt. Optional wird, falls notwendig, auch die Hilfszahl *ps,* die bei der Erstellung des Client-Passwort-Verifikationswertes *v* zur Passwortüberprüfung benutzt wurde, übertragen.
Der Client berechnet den Client-Schlüsselgrundwert $X_1$ für die Benutzung in einer Schlüsselableitungsfunktion und leitet den kryptografischen Hilfsschlüssel *k* unter Verwendung einer Hilfszahl $s_1$ daraus ab.
Der Client wählt den privaten Client-Authentifizier-Wert *a,* der für die Berechnung der jeweiligen Schlüsselbasis genutzt wird. Aus diesem Wert *a* berechnet der Client den zugehörigen öffentlichen Client-Auth-Key *A*.
Um die Kenntnis des gleichen Hilfsschlüssels *k* auf dem Server zu überprüfen und eine Manipulation auf dem Transportweg zu verhindern, wird Client-Auth-Key *A* vor der Übertragung entweder mit Hilfe von *k* verschlüsselt oder signiert. Zusätzlich wird aus dem Server-I D-Prüfwert *d* der zugehörige Server-ID-Prüfkey *D* berechnet und an den Server übermittelt. Die Hilfszahl $s_1$ wird ebenfalls an den Server übermittelt. Der Prüfkey *D* dient zur Überprüfung, ob der Server über das entsprechende Server-Passwort verfügt, also zur Authentisierung und Identitätsüberprüfung des Servers.
Der Server berechnet nun mit Hilfe der vorhandenen Daten den gleichen kryptografischen Hilfsschlüssel *k* und kann den empfangenen Client-Auth-Key *A* entschlüsseln oder, sollte dieser signiert übertragen worden sein, die Signatur überprüfen und damit ebenfalls die Integrität des Client-Auth-Keys *A* sicherstellen. Wenn sichergestellt werden kann, dass *A* (oder später *B*) auf dem Transportweg nicht manipuliert wurde, kann *A* (bzw. *B*) öffentlich bekannt sein, ohne die Sicherheit des Verfahrens einzuschränken.
Analog zum Client wählt der Server einen privaten Server-Authentifizier-Wert *b* und berechnet den öffentlichen Server-Auth-Key *B*.

Zusätzlich können aus dem eigenen privaten Server-Authentifizier-Wert *b*, dem empfangenen öffentlichen Client-Auth-Key *A,* dem Client-Passwort-Verifizierwert *v*, dem Server-Passwort-Ableitwert *y* und der Hilfszahl $s_2$ die Basisschlüssel $k_{DH1}$ und $k_{DH2}$ im Server berechnet werden. Aus dem Basisschlüssel $k_{DH1}$ wird nun der Schlüsselverifizierwert $k_1$ errechnet. Die Werte $k_{DH2}$ und $k_1$ bilden die Schlüsselbasis $Sb_s$ des Servers.

Analog zum Client übermittelt der Server nun seinen öffentlichen Server-Auth-Key *B* entweder verschlüsselt oder signiert an den Client. Die Hilfszahl $s_2$ wird ebenfalls an den Client übermittelt.

Der Client überprüft - genau wie der Server - die Integrität des empfangenen öffentlichen Server-Auth-Keys *B* und berechnet seinerseits unabhängig vom Server die Basisschlüssel $k_{DH1}$ und $k_{DH2}$. Aus dem Basisschlüssel $k_{DH2}$ wird der Schlüsselverifizierwert des Servers $k_2$ berechnet. Die Werte $k_{DH1}$ und $k_2$ bilden die Schlüsselbasis $Sb_c$ des Clients.

Der Client bildet nun bevorzugt eine Prüfsumme $R_1$ aus allen verwendeten Werten und der errechneten Schlüsselbasis $Sb_c$ und sendet dann $R_1$ an den Server. Aus dieser Prüfsumme $R_1$ lassen sich keine Rückschlüsse auf die verwendeten Werte oder auf die diversen berechneten Schlüssel ziehen.

Der Server errechnet unabhängig von der empfangenen Prüfsumme $R_1$ auf Basis der von ihm verwendeten Werte die theoretisch gleiche Prüfsumme $R_2$ und überprüft $R_1$ und $R_2$ auf Gleichheit. Sofern die Werte übereinstimmen, hat der Client nachgewiesen, dass die Schlüsselbasis unter Benutzung der gleichen Werte berechnet wurde. Gleichzeitig kann der Server davon ausgehen, dass die Schlüsselbasis korrekt berechnet wurde.

Der Server bildet bevorzugt eine weitere Prüfsumme $R_3$, die die Prüfsumme $R_2$, den Client-Auth-Key *A,* den Server-Authentifizier-Wert *b*, den Basisschlüssel des Servers $k_{DH2}$ und den Schlüsselverifizierwert $k_1$ für den Basisschlüssel des Clients umfasst. Die Prüfsumme $R_3$ wird an den Client übermittelt. Der Server löscht nun bevorzugt alle benutzten Werte, außer der berechneten Schlüsselbasis $Sb_s$.

Bevorzugt bildet der Client unabhängig von der empfangenen Prüfsumme $R_3$ einen korrespondierenden Vergleichswert, nämlich eine Prüfsumme $R_4$. $R_4$ wird auf der Basis der vom Client verwendeten Daten berechnet, wie oben bereits beschrieben. Dann prüft der Client die beiden Prüfsummen auf Gleichheit.

Bei Übereinstimmung von $R_3$ und $R_4$ kann auch der Client davon ausgehen, dass er über die Schlüsselbasis verfügt, die zu der des Servers passt, dass er also die konjugierte Schlüsselbasis hat. Der Client verwirft bevorzugt alle benutzten Werte außer der unabhängig vom Server berechneten Schlüsselbasis $Sb_c$.

Die Berechnung und Verwendung der Prüfsummen $R_1$ bis $R_4$ ist optional aber bevorzugt, um Manipulation der übertragenen Informationen auf der jeweiligen Empfängerseite festzustellen. Ein Man-in-the-Middle-Angriff kann somit entdeckt und abgewehrt werden. Im Client und Server müssen zur Herstellung der Sicherheit des Weiteren jeweils die Schlüssel des anderen Kommunikationspartners gelöscht werden, also muss $k_{DH1}$ auf dem Server und $k_{DH2}$ auf dem Client gelöscht werden.

Beide Kommunikationspartner sind im Besitz einer Schlüsselbasis, die jeweils zu der Schlüsselbasis der Gegenseite konjugiert ist. Gleichzeitig wurde im Verlauf des Verfahrens die Identität des jeweiligen Kommunikationspartners überprüft.

Das Besondere an dem so vorhandenen Schlüsselmaterial ist, dass jede Seite (sowohl Client als auch Server) nur über einen Teil verfügt, während der jeweilige zweite Teil in einer Form hinterlegt wird, die nur in Kombination mit dem korrespondierenden Teil der Gegenseite einsatzfähig ist. Der erste Parameter der Schlüsselbasis ist der eigene Basisschlüssel und der zweite Parameter ist ein Schlüsselverifizierwert, der aus dem Basisschlüssel des Kommunikationspartners berechnet wurde. So sind die beiden Schlüsselbasen miteinander verkoppelt. Es wird hier von konjugierten Schlüsselbasen und Basisschlüsseln gesprochen.

In Figur 2 wird die Erstellung eines Sitzungsschlüssels im Client und Server gezeigt sowie der zwischen den beiden Kommunikationspartner stattfindende Datenaustausch. Die Erstellung der Sitzungsschlüssel kann erst beginnen, wenn die beiden Kommunikationspartner jeweils eine Schüsselbasis besitzen, die mit der Schlüsselbasis des anderen Partners korrespondiert. Mit Hilfe dieser Schlüsselbasis können nun für weitere Kommunikationsvorgänge kurzfristig gültige, bevorzugt zeitlich begrenzte, Sitzungsschlüssel abgeleitet werden.

Zu Beginn des Verfahrens müssen dem Server bekannt sein:

- Die zu dem Client (Benutzer) zugehörige Schlüsselbasis des Servers ($k_{DH2}$ und $k_1$) ($k_1$ beruht auf dem Basisschlüssel des Clients).
- Der beim Serverstart aus dem Serverpasswort $pw_{Auth}$ berechnete Server-Passwort-Ableitwert *y.*

Dem Client müssen bekannt sein:

- Schlüsselbasis des Clients ($k_{DH1}$ und $k_2$), die mit der des Servers korrespondiert, mit dem kommuniziert werden soll.
- Der Server-Passwort-Verifikationswert *w.*

Darüber hinaus müssen beiden Kommunikationspartnern der benutzte Gruppenparameter *g* der mathematischen Gruppe *G,* sowie ein weiterer mathematischer Parameter *p,* bekannt sein.

Auch dieses Verfahren kann in mehrere "Kommunikationsrunden" unterteilt werden, die nacheinander ablaufen.

1. Kommunikationsrunde:

- Der Client stellt den Benutzernamen oder Identifikationswert *ID* der eigenen Identität zur Verfügung und übermittelt *ID* an den Server.

Der Server:

- Stellt die zu *ID* passende Identität und die dieser Identität zugeordneten Schlüsselbasis ($k_{DH2}$ und $k_1$) und den Server-Passwort-Ableitwert *y* fest.
- Wählt einen privaten Zufallsschlüssel, den Client-ID-Prüfwert $\bar{c}$.
- Berechnet daraus den öffentlichen Zufallsschlüssel, Client-I D-Prüfkey $\overline{C} = g^{\bar{c}}\ mod\ p.$
- Der Server übermittelt $\overline{C}$ an den Client.

2. Kommunikationsrunde:

Der Client:

- Wählt einen privaten Zufallsschlüssel, den Server-ID-Prüfwert $\bar{d}$.
- Berechnet daraus einen öffentlichen Zufallsschlüssel, den Server-ID-Prüfkey $\overline{D} = g^{\bar{d}}\ mod\ p.$
- Berechnet bevorzugt den Schlüsselgrundwert $X_3$.
- Wählt eine zufällige, öffentliche Hilfszahl $s_3$.
- Bestimmt den Sitzungsschlüssel $k_{Sitzung}$ und optional einen Signaturschlüssel $k_{Signatur}$ durch $k_{Sitzung}$, $k_{Signatur} = KDF_{SK}(X_3,S_3)$.
- Berechnet bevorzugt eine Prüfsumme

$$R_5 = H_K(k_{Signatur}, \bar{C} \| g^{\bar{d}}\ mod\ p \| (H(g^{k_{DH1}}\ mod\ p) \oplus H(k_2))).$$

- Übermittelt $\overline{D}$, $s_3$ und bevorzugt $R_5$ an den Server.

Der Server:

- Berechnet den Schlüsselgrundwert $X_4$ Der Schlüsselgrundwert $X_4$ soll definitionsgemäß gleich dem Schlüsselgrundwert $X_3$ sein.
- Bestimmt den Sitzungsschlüssel $k_{Sitzung}$ und optional einen Signaturschlüssel $k_{Signatur}$ durch $k_{Sitzung}$, $k_{Signatur} = KDF_{SK}(X_4,s_3)$, bevorzugt mittels der Ableitfunktion $KDF_{SK}$.
- Berechnet bevorzugt ebenfalls eine Prüfsumme

$$R_6 = H_K(k_{Signatur}, g^{\bar{c}}\ mod\ p \| \overline{D} \| (H(k_1) \oplus H(g^{k_{DH2}}\ mod\ p))).$$

- Überprüft die Prüfsummen $R_5$ und $R_6$ auf Gleichheit.
- Berechnet bevorzugt eine weitere Prüfsumme

$$R_7 = H_K(k_{Signatur}, R_6 \parallel g^{\bar{c}} \bmod p \parallel \overline{D} \parallel (H(k_1) \oplus H(g^{k_{DH2}} \bmod p))).$$

- Verwirft alle benutzten Werte, außer dem Sitzungsschlüssel $k_{Sitzung}$ und übermittelt bevorzugt $R_7$ an den Client.

3. Kommunikationsrunde:

Der Client:

- Berechnet bevorzugt eine Prüfsumme

$$R_8 = H_K(k_{Signatur}, R_5 \parallel \bar{C} \parallel g^{\bar{d}} \bmod p \parallel (H(g^{k_{DH1}} \bmod p) \oplus H(k_2))).$$

- Überprüft die Prüfsummen $R_7$ und $R_8$ auf Gleichheit.
- Verwirft alle benutzten Werte, außer dem Sitzungsschlüssel $k_{Sitzung}$.

Die obige Beschreibung des automatisierten Generierens der Sitzungsschlüssel für die Kommunikation zwischen Client und Server anhand von Figur 2 wird im Folgenden ergänzt und näher erläutert.

Nachdem auf beiden Seiten (Client und Server) die jeweils zur Gegenseite passende konjugierte Schlüsselbasis berechnet wurde, kann diese dazu verwendet werden, Sitzungsschlüssel für die Kommunikation abzuleiten bzw. zu berechnen.

Hierfür identifiziert sich der Client gegenüber dem Server, der daraufhin einen privaten Client-ID-Prüfwert $\bar{c}$ wählt bzw. generiert. Der Server berechnet dann den korrespondierenden öffentlichen Client-ID-Prüfkey $\overline{C}$ und übermittelt $\overline{C}$ an den Client.

Der Client wiederum wählt eine Hilfszahl $s_3$ und berechnet den Schlüsselgrundwert $X_3$. Der Schlüsselgrundwert $X_3$ und die Hilfszahl $s_3$ werden in einer Schlüsselableitfunktion verwendet, um den kryptografischen Sitzungsschlüssel $k_{Sitzung}$ für eine Kommunikationssitzung abzuleiten.

Die privaten Zufallsschlüssel $\bar{c}$ und $\bar{d}$ bzw. die jeweils korrespondierenden öffentlichen Zufallskeys $\overline{C}$ und $\overline{D}$ dienen bei diesem Vorgang dazu, die Schlüsselbasis (je ein Basisschlüssel und ein Schlüsselverifizierwert) beider Seiten zu einem gemeinsamen symmetrischen Schlüssel zu verbinden, obwohl jede Seite für sich gesehen nur über einen Teil der ursprünglich berechneten Basisschlüssel in benutzbarer Form verfügt.

Zum Nachweis, dass die übertragenen öffentlichen Zufallsschlüssel nicht manipuliert wurden, berechnet der Client nun bevorzugt eine Prüfsumme $R_5$, die alle verwendeten öffentlichen Werte, den Basisschlüssel des Clients $k_{DH1}$ und den Schlüsselverifizierwert $k_2$ für den Basisschlüssel des Servers und optional den Signaturschlüssel enthält. Diese Prüfsumme $R_5$ kann zusammen mit dem eigenen (aus dem privaten Zufallsschlüssel $\bar{d}$ berechneten) öffentlichen Zufallsschlüssel $\overline{D}$ und der Hilfszahl $s_3$ an den Server übertragen werden.

Der Server berechnet nun wiederum unter Benutzung der Hilfszahl $s_3$ und des Schlüsselgrundwerts $X_4$ den gleichen Sitzungsschlüssel $k_{Sitzung}$. Anschließend muss noch mittels der empfangenen Prüfsumme $R_5$ überprüft werden, ob die gleichen Werte für die durchgeführten Berechnungen verwendet wurden. Hierfür wird bevorzugt eine Prüfsumme $R_6$ benutzt.

Um wiederum die Integrität der verwendeten Werte gegenüber dem Client sicherzustellen, wird bevorzugt abschließend eine weitere Prüfsumme $R_7$ errechnet und an den Client übermittelt.

Der Client vergleicht bevorzugt die empfangene Prüfsumme $R_7$ mit einem unabhängig berechneten Vergleichswert, Prüfsumme $R_8$. Bei Übereinstimmung der Prüfsummen $R_7$ und $R_8$ kann der Client davon ausgehen, dass die verwendeten und berechneten Werte gleich sind.

Beide Seiten haben nun unabhängig voneinander einen Sitzungsschlüssel $k_{Sitzung}$ berechnet, der für weitere Zwecke und eine Kommunikation zwischen den Partnern eingesetzt werden kann, beispielsweise von einer Applikation auf dem Client.

Im Folgenden werden nochmals die Vorteile des beschriebenen Verfahrens erläutert:

Es werden keine nutzbaren Informationen über benutzte Passworte auf dem Server hinterlegt oder während Ablauf des Verfahrens übertragen. Es ist somit unabhängig vom benutzten Kommunikationskanal.

Mitschneiden der übertragenen Informationen lässt keine Rückschlüsse auf benutzte Passworte oder Schlüssel zu.

Manipulationen der übertragenen Informationen können auf der jeweils betroffenen Empfängerseite festgestellt werden. Ein sogenannter Man-In-The-Middle-Angriff kann entdeckt und abgewehrt werden.

Das im Ergebnis des Verfahrens erreichte gemeinsame Schlüsselmaterial (Sitzungsschlüssel $k_{Sitzung}$) wird unabhängig bei beiden Kommunikationspartnern berechnet und zu keinem Zeitpunkt übertragen.

Kenntnis der auf dem Server gespeicherten Informationen ist nicht ausreichend, um sich gegenüber diesem erfolgreich im Schlüsselberechnungsverfahren zu authentisieren.

Kenntnis eines aus einem Schlüsselberechnungsverfahren resultierenden Schlüssels des Servers ist nicht ausreichend, um einen gültigen Sitzungsschlüssel mit diesem auszuhandeln.

Der Server kann folglich nicht als Client agieren bzw. sich nicht als Client authentisieren. Konkret können die, z.B. durch Diebstahl, auf dem Server hinterlegten Daten nicht genutzt werden, um sich zu einem späteren Zeitpunkt als berechtigter Kommunikationspartner gegenüber dem Server auszuweisen (authentisieren).

Kenntnis der auf dem Client gespeicherten Informationen ist nicht ausreichend, um als Server im Schlüsselberechnungsverfahren zu handeln.

Kenntnis des aus einem Schlüsselberechnungsverfahren resultierenden Schlüsselmaterials des Clients ist nicht ausreichend, um einen gültigen Sitzungsschlüssel mit diesem auszuhandeln.

Der Client kann folglich nicht als Server agieren. Bei Verlust der auf dem Client hinterlegten Daten, können diese z.B. nicht dazu genutzt werden, um damit gegenüber dem Client zu einem späteren Zeitpunkt als Server aufzutreten.

Alle resultierenden Schlüssel sind unabhängig voneinander. Von einer in der Vergangenheit ausgehandelten Schlüsselbasis oder einem in der Vergangenheit ausgehandelten Sitzungsschlüssel kann nicht auf zukünftiges Schlüsselmaterial bzw. zukünftige Schlüssel oder in der Vergangenheit ausgehandelte Schlüsselbasen bzw. Sitzungsschlüssel geschlossen werden.

Von gestohlenen Schlüsseln, die in der Vergangenheit benutzt wurden, kann nicht auf benutzte Passworte geschlossen werden.

Eine mathematische Gruppe ist ausreichend, um das Verfahren durchzuführen. Somit kann das Verfahren beispielsweise auch mit elliptischen Kurven eingesetzt werden. Allgemein ist das Verfahren für jede mathematische Gruppe $G := (M, \circ)$ geeignet, die aus einer Menge $M$ und einer (einzigen) Verknüpfung $\circ$ besteht, die die Elemente von $M$ miteinander verknüpft. Dies ist von Bedeutung, falls in Zukunft eine mathematische Gruppe gefunden bzw. definiert werden kann, die eine höhere Sicherheit pro Schlüssellänge gewährleistet als elliptische Kurven. Eine solche mathematische Gruppe ist allerdings zum Zeitpunkt dieser Erfindung nicht bekannt bzw. definiert.

Es hat sich als vorteilhaft erwiesen, dass keine Zertifikate für eine Authentifizierung benötigt werden. Es besteht somit keine Abhängigkeit von Dritten. Die Authentifizierung basiert auf Passworten.

Es werden die Authentifizierung und Schlüsselberechnung in einem Verfahren kombiniert. In Kombination mit einer geeigneten Blockchiffre besteht nach dem Verfahren eine gesicherte Verbindung zwischen zwei jeweilig identifizierten Kommunikationspartnern, die eine Integrität und Vertraulichkeit der versandten und übermittelten Daten gewährleisten.

Die vorliegende Erfindung beruht auf einigen allgemeinen Definitionen und Erkenntnissen, die Grundlage für die Erfindung waren und hier als Begriffserklärungen aufgeführt sind :

Mathematische Gruppe $G$:

Alle beschriebenen Berechnungen finden in einer geeigneten mathematischen Gruppe $G := (M, \circ)$ statt, wobei $M$ eine Menge von Elementen und $\circ$ die definierte Verknüpfung ist, die Elemente aus der Menge $M$ miteinander verknüpft.

Eine mögliche Gruppe $G := (M, \circ)$ ist z.B. die von einer elliptischen Kurve modulo einer Primzahl $p$ beschriebenen Punktmenge $M$, zusammen mit der für Punkte $P, Q \in M$ auf elliptischen Kurven definierten Verknüpfung $\circ$, genannt "Addition", die sich maßgeblich von der im $\mathbb{R}^2$ üblichen Vektoraddition unterscheidet.

Wird der Punkt $P \in M$ $a$-fach zu sich selbst addiert, wird verkürzt $aP$ für

$$\underbrace{P \circ ... \circ P}_{a-mal}$$

geschrieben.

Eine weitere mögliche Gruppe stellt die Restklasse modulo einer Primzahl $p$ mit der Multiplikation als benutzte Verknüpfung dar. Es wird dann verkürzt $g^a$ statt

$$\underbrace{g \circ ... \circ g}_{a-mal}$$

geschrieben.

In der Beschreibung wird die Notation für die Restklasse modulo $p$, die durch einen Generator $g$ generiert wird, genutzt.

Die Sicherheit des Verfahrens beruht darauf, dass es keinen effizienten Algorithmus gibt, um in der benutzten Gruppe $G$ den sogenannten diskreten Logarithmus zu berechnen. Bisher wurde solch ein effizienter Algorithmus weder für geeignete prime Restklassen noch für geeignete durch elliptische Kurven mit entsprechend definierter Addition beschriebene Gruppen gefunden.

Hashfunktion $H$:

$H$ bzw. $H_K$ bezeichnen geeignete kryptografische Hashfunktionen. Der benutzte Parameter für die Funktion $H$ ist die jeweils zu hashende Nachricht. Für keyed Hashfunktionen $H_K$ sind die benutzten Parameter der benutzte Schlüssel und die zu hashende Nachricht. Der Zielraum beider benutzter Hashfunktionen muss derart sein, dass weitere Verknüpfungen in der benutzten mathematischen Gruppe möglich sind.

Schlüsselableitungsfunktion $KDF$ (Key Derivation Function):

Es werden zwei unterschiedliche Schlüsselableitungsfunktionen genutzt. Eine Funktion $KDF_{SK}$ zur Ableitung von Schlüsseln aus Eingabematerial, welches einer Menge mit stetiger Gleichverteilung entstammt und eine weitere Funktion $KDF_{PW}$ zur Ableitung von kryptografisch nutzbaren Schlüsseln aus Passworten.

Cipher:

Die benutzte symmetrische Cipher muss das Prinzip der "authenticated encryption" befolgen oder es muss mittels manueller Prüfsumme (Machine Authentication Code (MAC)) dafür Sorge getragen werden, dass die chiffrierte Nachricht bei der Übertragung nicht verändert werden kann. Die Verschlüsselungsfunktion wird mit $E$ und die Entschlüsselungsfunktion wird mit $E^{-1}$ gekennzeichnet. Die benutzten Parameter sind jeweils ein Schlüssel und eine Klartext- bzw. eine chiffrierte Nachricht.

Die Cipher kommt zum Einsatz, um damit die öffentlichen Schlüssel zu chiffrieren. Der Chiffriertext ist auf dem Transportweg durch Benutzung einer Prüfziffer vor Manipulation geschützt. Die jeweilige Gegenseite weist durch ihre Fähigkeit, den übertragenen Wert unter Benutzung des beschriebenen Verfahrens zu entschlüsseln, ihre Kenntnis des benötigten Passworts nach.

Alternativ können die öffentlichen Schlüssel tatsächlich öffentlich, aber zusätzlich mit einer mittels keyed Hash-Funktion erstellten Signatur übertragen werden, welche von der Gegenseite dann auf Manipulation überprüft werden muss.

Erläuterungen:

| | |
|---|---|
| $a \parallel b$: | Die Werte $a$ und $b$ werden konkateniert z.B. 15 $\parallel$ 42 = 1542. |
| $H(m)$: | Bildet den Hashwert von $m$ mittels der Hashfunktion $H$. |
| $H_K(k,m)$: | Bildet den keyed Hash von $m$ mittels der Hashfunktion $H_K$ unter Benutzung des Schlüssels $k$. |
| $E(k,m)$: | Verschlüsselt den Klartextwert $m$ mittels Verschlüsselungsfunktion $E$ unter Benutzung des Schlüssels $k$. |
| $E^{-1}(k,c_n)$: | Entschlüsselt den chiffrierten Text $c_n$ mittels Entschlüsselungsfunktion $E^{-1}$ unter Benutzung des Schlüssels $k$. |
| $KDF_{SK}(sk,s)$: | Ableiten eines Schlüssels aus einem geheimen Wert $sk$ unter der Benutzung eines optionalen Zufallswertes $s$. |
| $KDF_{PW}(pw,s)$: | Ableiten eines Schlüssels aus einem geheimen Passwort pw unter der Benutzung eines erforderlichen Zufallswertes $s$. |
| $a \oplus b$: | Verknüpfen der Werte $a$ und $b$ mittels "exklusivem oder" (xor) |

**Patentansprüche**

1. Verfahren zur Herstellung einer sicheren Kommunikation zwischen einem Client und einem Server als Kommunikationspartner über eine ungesicherte Datenverbindung zur Übertragung von Daten umfassend die folgenden Schritte:

- Erzeugen einer ersten Schlüsselbasis ($Sb_c$) im Client und einer zweiten Schlüsselbasis ($Sb_s$) im Server, wobei die erste Schlüsselbasis ($Sb_c$) einen Client-Basisschlüssel ($k_{DH1}$) und einen Schlüssel-Verifizierer ($k_2$) umfasst und die zweite Schlüsselbasis ($Sb_s$) einen Server-Basisschlüssel ($k_{DH2}$) und einen Schlüssel-Verifizierer ($k_1$) umfasst, wobei der Schlüssel-Verifizierer ($k_1$) auf dem Client-Basisschlüssel ($k_{DH1}$) basiert und der Schlüssel-Verifizierer ($k_2$) auf dem Server-Basisschlüssel ($k_{DH2}$) basiert;

- Erzeugen eines Sitzungsschlüssels ($k_{Sitzung}$), wobei der Client und der Server den gleichen Sitzungsschlüssel ($k_{Sitzung}$), erzeugen und der jeweilige Sitzungsschlüssel ($k_{Sitzung}$), jeweils mittels der entsprechenden Schlüsselbasis ($Sb_c$ bzw. $Sb_s$) generiert wird,

- Verschlüsseln aller zu übertragenden Daten in einem Sender mit dem generierten Sitzungsschlüssel ($k_{Sitzung}$), vor der Übertragung,

- Empfangen und entschlüsseln der empfangenen Daten mit dem generierten Sitzungsschlüssel ($k_{Sitzung}$), in einem Empfänger, wobei der Sender und der Empfänger jeweils der Client oder der Server sein können,

wobei

- während der Erzeugung der Schlüsselbasis ($Sb_c$ bzw. $Sb_s$) und während der Erzeugung des Sitzungsschlüssels ($k_{Sitzung}$), eine Authentifizierung stattfindet, mittels der ein Kommunikationspartner die Authentizität des jeweils anderen Kommunikationspartners verifizieren kann, und

- keiner der Kommunikationspartner sich als der andere Kommunikationspartner authentisieren kann.

2. Verfahren nach Anspruch 1, **dadurch gekennzeichnet, dass** während der Erzeugung der Basisschlüssel ($k_{DH1}$, $k_{DH2}$) und der Sitzungsschlüssel ($k_{Sitzung}$) Prüfsummen ($R_1$-$R_8$) gebildet werden, die an den Kommunikationspartner übermittelt und mit von ihm selbst erzeugten Prüfsummen ($R_1$-$R_8$) verglichen werden, um eine unbeeinflusste, nicht kompromittierte Übertragung von öffentlichen Parametern, die bei der Schlüsselerzeugung verwendet wurden, zu überprüfen und zu bestätigen.

3. Verfahren nach Anspruch 1 oder 2, **dadurch gekennzeichnet, dass** die Erzeugung der Basisschlüssel ($k_{DH1}$, $k_{DH2}$) und der Sitzungsschlüssel ($k_{Sitzung}$), auf privaten und geheimen, teilweise selbstgenerieten Zufallswerten und auf öffentlich zugänglichen Parametern, die von dem Kommunikationspartner erzeugt und empfangen werden, basiert.

4. Verfahren nach einem der vorherigen Ansprüche, **dadurch gekennzeichnet, dass** eine Registrierung des Clients beim Server und eine anschließende Anmeldung beim Server erfolgt, bei der eine Schlüsselbasis ($Sb_c$ bzw. $Sb_s$) erzeugt wird.

5. Verfahren nach einem der vorherigen Ansprüche, **dadurch gekennzeichnet, dass** jeder Kommunikationspartner in Besitz eines Schlüsselverifizierwerts ($k_1$ bzw. $k_2$) ist, der zur Überprüfung dient, ob der jeweils andere Kommunikationspartner Kenntnis über die konjugierte Schlüsselbasis hat.

6. Verfahren nach einem der vorherigen Ansprüche, **dadurch gekennzeichnet, dass** auf dem Client und auf dem Server mehrere Sitzungsschlüssel ($k_{Sitzung}$), erzeugt werden können, die von unterschiedlichen Programmen auf dem Client zur jeweiligen Kommunikation mit dem Server verwendet werden.

7. Verfahren nach einem der vorherigen Ansprüche, wobei das Erzeugen der Schlüsselbasis ($Sb_c$ bzw. $Sb_s$) im Client bzw. Server die folgenden Schritte umfasst:

- Berechnung eines Client-Schlüsselgrundwertes ($X_1$) im Client mittels zur Verfügung stehender Parameter und Werte;

- Berechnen eines kryptografischen Hilfskeys ($k$) mittels des Client-Schlüsselgrundwerts ($X_1$), bevorzugt mittels einer Schlüssel-Ableitfunktion;

- Bilden eines ersten Authentifizier-Crypto-Wertes ($c_1$) durch Verschlüsselung eines Client-Auth-Keys ($A$) mit dem Hilfskey ($k$);

- Übertragen des Authentifizier-Crypto-Wertes ($c_1$) an den Server;

- Berechnung eines Server-Schlüsselgrundwertes ($X_2$) im Server mittels zur Verfügung stehender Parameter und Werte;

- Unabhängiges Berechnen des Hilfskeys ($k$) aus dem Server-Schlüsselgrundwert ($X_2$), bevorzugt mittels einer Schlüssel-Ableitfunktion;

- Unabhängiges Berechnen des Client-Auth-Keys ($A$) im Server durch Entschlüsseln des empfangenen ersten Authentifizier-Crypto-Wertes ($c_1$) mittels des Hilfskeys ($k$);

- Erzeugen eines öffentlichen Server-Auth-Keys ($B$);
- Berechnen des Schlüsselpaares mit zwei Basisschlüsseln ($k_{DH1}$) und ($k_{DH2}$) im Server aus dem Client-Auth-Key ($A$), und aus einem Client-Passwort-Verifizierwert ($v$), bevorzugt mittels einer Schlüssel-Ableitfunktion;
- Berechnen des Schlüsselverifizierwerts ($k_1$) aus dem Basisschlüssel ($k_{DH1}$) und anschließendes Löschen des Basisschlüssels ($k_{DH1}$), um die Schlüsselbasis ($Sb_s$) für den Server zu bilden;
- Bilden eines zweiten Authentifizier-Crypto-Wertes ($c_2$) im Server durch Verschlüsselung eines Server-Auth-Keys ($B$) mit dem Hilfskey ($k$);
- Übertragen des zweiten Authentifizier-Crypto-Wertes ($c_2$) an den Client;
- Unabhängiges Berechnen des Server-Auth-Keys ($B$) im Client durch Entschlüsseln des empfangenen Authentifizier-Crypto-Wertes ($c_2$) mittels des Hilfskeys ($k$);
- Berechnen des Schlüsselpaares mit den zwei Basisschlüsseln ($k_{DH1}$, $k_{DH2}$) im Client bevorzugt mittels einer Ableitfunktion, aus dem Server-Auth-Key ($B$), und einem Server-Passwort-Verifizierwert ($w$);
- Berechnen des Schlüsselverifizierwerts ($k_2$) aus dem Basisschlüssel ($k_{DH2}$) und anschließendes Löschen des Basisschlüssels ($k_{DH2}$), um die Schlüsselbasis ($Sb_C$) für den Client zu bilden.

8. Verfahren nach dem vorherigen Anspruch, **dadurch gekennzeichnet, dass** sich an die Erzeugung der Schlüsselbasis im Client und im Server eine Integritätsprüfung anschließt, die bevorzugt die folgenden Schritte umfasst:

- Bilden einer ersten Prüfsumme ($R_1$) im Client, bevorzugt mittels einer Hash-Funktion, aus dem Schlüsselverifizierwert ($k_2$) für den Basisschlüssel des Servers und dem Basisschlüssel des Clients ($k_{DH1}$);
- Übertragen der Prüfsumme ($R_1$) an den Server;
- Bilden einer zweiten Prüfsumme ($R_2$) im Server, bevorzugt mittels einer Hash-Funktion, aus dem Schlüsselverifizierwert ($k_1$) für den Basisschlüssel des Clients und dem Basisschlüssel des Servers ($k_{DH2}$);
- Überprüfen der Prüfsummen ($R_1$) und ($R_2$) im Server auf Gleichheit;
- Bilden einer dritten Prüfsumme ($R_3$) im Server bestehend aus der zweiten Prüfsumme ($R_2$), dem Basisschlüssel des Servers ($k_{DH2}$) und dem Schlüsselverifizierwert ($k_1$) für den Basisschlüssel des Clients, bevorzugt mittels einer Hash-Funktion;
- Übertragen der dritten Prüfsumme ($R_3$) an den Client;
- Bilden einer vierten Prüfsumme ($R_4$) im Client aus der ersten Prüfsumme ($R_1$), dem Schlüsselverifizierwert ($k_2$) für den Basisschlüssel des Servers und dem Basisschlüssel des Clients ($k_{DH1}$), bevorzugt mittels einer Hash-Funktion;
- Überprüfen der Prüfsummen ($R_3$ und $R_4$) im Client auf Gleichheit; und
- Abbruch der Schlüsselerzeugung bei fehlender Gleichheit der Prüfsummen ($R_1$ und $R_3$) oder der Prüfsummen ($R_3$ und $R_4$).

9. Verfahren nach einem der vorhergehenden Ansprüche, **dadurch gekennzeichnet, dass** die Erzeugung des Sitzungsschlüssels ($k_{Sitzung}$), folgende Schritte umfasst:

- Berechnen eines Client-Grundwertes ($X_3$) im Client mittels zur Verfügung stehender Parameter und Werte, einschließlich der Schlüsselbasis ($Sb_c$);
- Berechnen eines Sitzungsschlüssels ($k_{Sitzung}$), und optional eines Signaturschlüssels ($k_{Signatur}$) für den Client, bevorzugt mittels einer Ableitfunktion, aus dem Client-Grundwert ($X_3$);
- Berechnen eines Server-Grundwerts ($X_4$) im Server mittels zur Verfügung stehender Parameter und Werte, einschließlich der Schlüsselbasis ($Sb_s$);
- Berechnen des Sitzungsschlüssels ($k_{Sitzung}$), und optional eines Signaturschlüssels ($k_{Signatur}$) für den Server, bevorzugt mittels einer Ableitfunktion, aus dem Server-Grundwert ($X_4$).

10. Verfahren nach Anspruch 9, **dadurch gekennzeichnet, dass** an die Erzeugung des Sitzungsschlüssels im Client und Server eine Integritätsprüfung anschließt, die bevorzugt die folgenden Schritte umfasst:

- Bilden einer Prüfsumme ($R_5$) im Client, bevorzugt mittels einer Hash-Funktion unter Einsatz des optionalen Signaturschlüssels ($k_{Signatur}$), aus dem Basisschlüssel des Clients ($k_{DH1}$) und dem Schlüsselverifizierwert ($k_2$) für den Basisschlüssel des Servers;
- Übertragen der Prüfsumme ($R_5$) an den Server;
- Bilden einer Prüfsumme ($R_6$) im Server, bevorzugt mittels einer Hash-Funktion unter Einsatz des optionalen Signaturschlüssels ($k_{Signatur}$) aus dem Schlüsselverifizierwert ($k_1$) für den Basisschlüssel des Clients und dem Basisschlüssel des Servers ($k_{DH2}$);
- Überprüfen der Prüfsummen ($R_5$ und $R_6$) im Server auf Gleichheit;

- Bilden einer Prüfsumme ($R_7$) aus der Prüfsumme ($R_6$), dem Schlüsselverifizierwert ($k_1$) für den Basisschlüssel des Clients und dem Basisschlüssel des Servers ($k_{DH2}$), bevorzugt mittels einer Hash-Funktion;
- Übertragen der Prüfsumme ($R_7$) an den Client;
- Bilden einer Prüfsumme ($R_8$) im Client aus der Prüfsumme ($R_5$), dem Basisschlüssel des Clients ($k_{DH1}$) und dem Schlüsselverifizierwert ($k_2$) für den Basisschlüssel des Clients, bevorzugt mittels einer Hash-Funktion;
- Überprüfen der Prüfsummen ($R_7$ und $R_8$) im Client auf Gleichheit;
- optionaler Abbruch der Schlüsselerzeugung bei fehlender Gleichheit der Prüfsummen ($R_5$ und $R_6$) oder der Prüfsummen ($R_7$ und $R_8$).

11. Verfahren nach einem der Ansprüche 9 oder 10, **dadurch gekennzeichnet, dass** der Sitzungsschlüssel ($k_{Sitzung}$), für die Verschlüsselung von zu übertragenden Daten oder Informationen zwischen Client und Server verwendet wird, bevorzugt in einer einzelnen Applikation, die eine Kommunikation zwischen Client und Server ausführt, wobei bevorzugt für jede Applikation, die eine Kommunikation zwischen Client und Server ausführt, ein eigener Sitzungsschlüssel ($k_{Sitzung}$), erzeugt und verwendet wird.

12. Verfahren nach einem der Ansprüche 9 bis 11, **dadurch gekennzeichnet, dass** der verwendete Sitzungsschlüssel ($k_{Sitzung}$), zeitlich limitiert ist und nach Ablauf einer bevorzugt vorgegebenen Zeit verfällt und sehr bevorzugt gelöscht wird.

13. Verfahren nach einem der Ansprüche 9 bis 12, **dadurch gekennzeichnet, dass** der verwendete Sitzungsschlüssel ($k_{Sitzung}$) gelöscht wird, wenn eine Sitzung mit Kommunikation zwischen dem Client und dem Server beendet oder unterbrochen wird oder ruht, bevorzugt für eine vorbestimmte Zeit.

14. Verfahren nach einem der vorhergehenden Ansprüche, **dadurch gekennzeichnet, dass** die Berechnung des Schlüssels ($A,B$) jeweils aus einem frei wählbaren Zufallswert ($a,b$) erfolgt.

15. Verfahren nach einem der vorhergehenden Ansprüche, **dadurch gekennzeichnet, dass** die Bildung der Authentifizier-Crypto-Werte ($c_1,c_2$) mittels einer Verschlüsselungsfunktion ($E$) erfolgt, zu der eine korrespondierende Entschlüsselungsfunktion ($E^{-1}$) existiert.

## Claims

1. Method for establishing a secure communication between a client and a server as communication partners via an unsecured data link for the transmission of data, comprising the following steps:

- generating a first key base ($Sb_c$) in the client and a second key base ($Sb_s$) in the server, wherein the first key base ($Sb_c$) comprises a client base key ($k_{DH1}$) and a key verifier ($k_2$), and the second key base ($Sb_s$) comprises a server base key ($k_{DH2}$) and a key verifier ($k_1$), wherein the key verifier ($k_1$) is based on the client base key ($k_{DH1}$), and the key verifier ($k_2$) is based on the server base key ($k_{DH2}$);
- generating a session key ($k_{Sitzung}$), wherein the client and the server generate the same session key ($k_{Sitzung}$), and each session key ($k_{Sitzung}$) is generated by means of the respective key base ($Sb_c$ and/or $Sb_s$),
- encrypting all data to be transmitted in a transmitter with the generated session key ($k_{Sitzung}$) prior to transmission,
- receiving and decrypting the received data with the generated session key ($k_{Sitzung}$) in a receiver, wherein the transmitter and the receiver may each be the client or the server,

wherein

- during generation of the key base ($Sb_c$ and/or $Sb_s$) and during generation of the session key ($k_{Sitzung}$) an authentication takes place by means of which one communication partner can verify the authenticity of the respective other communication partner, and
- none of the communication partners can authenticate itself as the other communication partner.

2. Method according to claim 1, **characterized in that** checksums ($R_1$ - $R_8$) are generated during generation of the base keys ($k_{DH1}$, $k_{DH2}$) and the session keys ($k_{Sitzung}$), which checksums are transmitted to the communication partner and are compared with checksums ($R_1$ - $R_8$) generated by the receiving communication partner in order to verify and to confirm an unaffected, uncompromised transmission of public parameters that were used during key generation.

3. Method according to claim 1 or 2, **characterized in that** generation of the base keys ($k_{DH1}$, $k_{DH2}$) and the session keys ($k_{Sitzung}$) is based on private and secret, partially self-generated random values and on publicly accessible parameters that are generated and received by the communication partner.

4. Method according to any one of the preceding claims, **characterized in that** a registration of the client at the server and a subsequent login at the server takes place during which a key base ($Sb_c$ and/or $Sb_s$) is generated.

5. Method according to any one of the preceding claims, **characterized in that** each communication partner is in possession of a key verification value ($k_1$ and/or $k_2$) which serves to check whether the respective other communication partner has knowledge of the conjugate key base.

6. Method according to any one of the preceding claims, **characterized in that** a plurality of session keys ($k_{Sitzung}$) can be generated on the client and on the server, which session keys are used by different applications on the client for the respective communication with the server.

7. Method according to any one of the preceding claims, wherein the generation of the key base ($Sb_c$ and/or $Sb_s$) in the client and/or the server comprises the following steps:

   - calculating a client key base value ($X_1$) in the client by means of available parameters and values;
   - calculating a cryptographic auxiliary key ($k$) by means of the client key base value ($X_1$), preferably by means of a key derivation function;
   - generating a first authentication-crypto-value ($c_1$) by encryption of a client-auth-key ($A$) with the auxiliary key ($k$);
   - transmitting the authentication-crypto-value ($c_1$) to the server;
   - calculating a server key base value ($X_2$) in the server by means of available parameters and values;
   - independent calculation of the auxiliary key ($k$) from the server key base value ($X_2$), preferably by means of a key derivation function;
   - independent calculation of a client-auth-key ($A$) in the server by decrypting the received first authentication-crypto-value ($c_1$) by means of the auxiliary key ($k$);
   - generating a public server-auth-key ($B$);
   - calculating the key pair with two base keys ($k_{DH1}$) and ($k_{DH2}$) in the server from the client-auth-key ($A$) and from a client password verification value ($v$), preferably by means of a key derivation function;
   - calculation of the key verification value ($k_1$) from the base key ($k_{DH1}$) and subsequent deletion of the base key ($k_{DH1}$) in order to generate the key base ($Sb_s$) for the server;
   - generating a second authentication-crypto-value ($c_2$) in the server by encryption of a server-auth-key ($B$) with the auxiliary key ($k$);
   - transmitting the second authentication-crypto-value ($c_2$) to the client;
   - independent calculation of the server-auth-key ($B$) in the client by decrypting the received authentication-crypto-value ($c_2$) by means of the auxiliary key ($k$);
   - calculating the key pair with the two base keys ($k_{DH1}$, $k_{DH2}$) in the client, preferably by means of a derivation function, from the server-auth-key ($B$) and a server password verification value ($w$);
   - calculation of the key verification value ($k_2$) from the base key ($k_{DH2}$) and subsequent deletion of the base key ($k_{DH2}$) in order to generate the key base ($Sb_C$) for the client.

8. Method according to the preceding claim, **characterized in that** the generation of the key base in the client and in the server is followed by an integrity check which preferably comprises the following steps:

   - generating a first checksum ($R_1$) in the client, preferably by means of a hash function, from the key verification value ($k_2$) for the base key of the server and the base key of the client ($k_{DH1}$);
   - transmitting the checksum ($R_1$) to the server;
   - generating a second checksum ($R_2$) in the server, preferably by means of a hash function, from the key verification value ($k_1$) for the base key of the client and the base key of the server ($k_{DH2}$);
   - checking the checksums ($R_1$) and ($R_2$) in the server for consistency;
   - generating a third checksum ($R_3$) in the server consisting of the second checksum ($R_2$), the base key of the server ($k_{DH2}$), and the key verification value ($k_1$) for the base key of the client, preferably by means of a hash function;
   - transmitting the third checksum ($R_3$) to the client;

- generating a fourth checksum ($R_4$) in the client from the first checksum ($R_1$), the key verification value ($k_2$) for the base key of the server, and the base key of the client ($k_{DH1}$), preferably by means of a hash function;
- checking the checksums ($R_3$ and $R_4$) in the client for consistency; and
- aborting key generation if the checksums ($R_1$ and $R_2$) or the checksums ($R_3$ and $R_4$) are not consistent.

9. Method according to any one of the preceding claims, **characterized in that** the generation of the session key ($k_{Sitzung}$) comprises the following steps:

- calculating a client base value ($X_3$) in the client by means of available parameters and values, including the key base ($Sb_c$);
- calculating a session key ($k_{Sitzung}$) and optionally a signature key ($k_{Signatur}$) for the client, preferably by means of a derivation function, from the client base value ($X_3$);
- calculating a server base value ($X_4$) in the server by means of available parameters and values, including the key base ($Sb_s$);
- calculating the session key ($k_{Sitzung}$) and optionally a signature key ($k_{Signatur}$) for the server, preferably by means of a derivation function, from the server base value ($X_4$).

10. Method according to claim 9, **characterized in that** the generation of the session key in the client and the server is followed by an integrity check which preferably comprises the following steps:

- generating a checksum ($R_5$) in the client, preferably by means of a hash function and by using the optional signature key ($k_{Signatur}$), from the base key of the client ($k_{DH1}$) and the key verification value ($k_2$) for the base key of the server;
- transmitting the checksum ($R_5$) to the server;
- generating a checksum ($R_6$) in the server, preferably by means of a hash function and by using the optional signature key ($k_{Signatur}$), from the key verification value ($k_1$) for the base key of the client and the base key of the server ($k_{DH2}$);
- checking the checksums ($R_5$ and $R_6$) in the server for consistency;
- generating a checksum ($R_7$) from the checksum ($R_6$), the key verification value ($k_1$) for the base key of the client, and the base key of the server ($k_{DH2}$), preferably by means of a hash function;
- transmitting the checksum ($R_7$) to the client;
- generating a checksum ($R_8$) in the client from the checksum ($R_5$), the base key of the client ($k_{DH1}$), and the key verification value ($k_2$) for the base key of the client, preferably by means of a hash function;
- checking the checksums ($R_7$ and $R_8$) in the client for consistency;
- optional abortion of key generation if the checksums ($R_5$ and $R_6$) or the checksums ($R_7$ and $R_8$) are not consistent.

11. Method according to one of the claims 9 or 10, **characterized in that** the session key ($k_{Sitzung}$) is used for the encryption of data or information to be transmitted between client and server, preferably within a single application that carries out a communication between client and server, wherein preferably a distinct session key ($k_{Sitzung}$) is generated and used for each application that carries out a communication between client and server.

12. Method according to any one of the claims 9 to 11, **characterized in that** the session key ($k_{Sitzung}$) used is time-limited and, after expiration of a preferably predetermined time, expires and very preferably is deleted.

13. Method according to any one of the claims 9 to 12, **characterized in that** the session key ($k_{Sitzung}$) used is deleted when a session with communication between the client and the server is terminated or interrupted or is resting, preferably for a predetermined time.

14. Method according to any one of the preceding claims, **characterized in that** the calculation of each key ($A,B$) is based on an arbitrary random value ($a,b$).

15. Method according to any one of the preceding claims, **characterized in that** the authentication-crypto-values ($c_1$, $c_2$) are generated by means of an encryption function ($E$) for which a corresponding decryption function ($E^{-1}$) exists.

**Revendications**

1. Procédé pour établir une communication sécurisée entre un client et un serveur en tant que partenaires de communication via une liaison de données non sécurisée pour la transmission de données, comportant les étapes suivantes :

   - génération d'une première base de clé (Sbc) dans le client et d'une deuxième base de clé (Sbs) dans le serveur, la première base de clé (Sbc) comprenant une clé de base de client (kDH1) et un vérificateur de clé (k2) et la deuxième base de clé (Sbs) comprenant une clé de base de serveur (kDH2) et un vérificateur de clé (k1), le vérificateur de clé (k1) étant basé sur la clé de base de client (kDH1) et le vérificateur de clé (k2) étant basé sur la clé de base de serveur (kDH2) ;
   - génération d'une clé de session (kSitzung), le client et le serveur générant la même clé de session (kSitzung) et la clé de session respective (kSitzung) étant générée respectivement au moyen de la base de clé correspondante (Sbc resp. Sbs) ;
   - cryptage de toutes les données à transmettre dans un émetteur avec la clé de session générée (kSitzung) avant la transmission ;
   - réception et décryptage des données reçues avec la clé de session générée (kSitzung) dans un récepteur, l'émetteur et le récepteur pouvant être respectivement le client ou le serveur,
   - une authentification ayant lieu, pendant la génération de la base de clé (Sbc resp. Sbs) et pendant la génération de la clé de session (kSitzung), au moyen de laquelle un partenaire de communication peut vérifier l'authenticité de l'autre partenaire de communication respectif et
   - aucun des partenaires de communication ne pouvant s'authentifier comme étant l'autre partenaire de communication.

2. Procédé selon la revendication 1, **caractérisé en ce que** sont formées, pendant la génération des clés de base (kDH1, kDH2) et des clés de session (kSitzung), des sommes de contrôle (R1 - R8) qui sont transmises au partenaire de communication et comparées avec des sommes de contrôle (R1 - R8) générées par lui-même pour vérifier et confirmer une transmission, non influencée et non compromise, de paramètres publics qui ont été utilisés lors de la génération de clé.

3. Procédé selon la revendication 1 ou 2, **caractérisé en ce que** la génération des clés de base (kDH1, kDH2) et des clés de session (kSitzung) est basée sur des valeurs aléatoires privées et secrètes, en partie auto-générées, et sur des paramètres accessibles publiquement qui sont générés et reçus par le partenaire de communication.

4. Procédé selon l'une des revendications précédentes, **caractérisé en ce qu'**il y a enregistrement du client auprès du serveur et ensuite connexion au serveur dans le cadre de laquelle est générée une base de clé (Sbc resp. Sbs).

5. Procédé selon l'une des revendications précédentes, **caractérisé en ce que** chaque partenaire de communication est en possession d'une valeur de vérification de clé (k1 resp. k2) qui sert à vérifier si l'autre partenaire de communication respectif a connaissance de la base de clé conjuguée.

6. Procédé selon l'une des revendications précédentes, **caractérisé en ce que** peuvent être générées, sur le client et sur le serveur, plusieurs clés de session (kSitzung) qui sont utilisées par différents programmes sur le client aux fins de la communication respective avec le serveur.

7. Procédé selon l'une des revendications précédentes, la génération de la base de clé (Sbc resp. Sbs) dans le client resp. le serveur comprenant les étapes suivantes :

   - calcul d'une valeur de base de clé de client (X1) dans le client au moyen de paramètres et de valeurs disponibles ;
   - calcul d'une clé auxiliaire cryptographique (k) au moyen de la valeur de base de clé de client (X1), de préférence au moyen d'une fonction de dérivation de clé ;
   - formation d'une première valeur cryptographique d'authentificateur (c1) par cryptage d'une clé d'authentification de client (A) avec la clé auxiliaire (k) ;
   - transmission de la valeur cryptographique d'authentificateur (c1) au serveur ;
   - calcul d'une valeur de base de clé de serveur (X2) dans le serveur au moyen de paramètres et de valeurs disponibles ;
   - calcul indépendant de la clé auxiliaire (k) à partir de la valeur de base de clé de serveur (X2), de préférence au moyen d'une fonction de dérivation de clé ;

- calcul indépendant de la clé d'authentification de client (A) dans le serveur par décryptage de la première valeur cryptographique d'authentificateur reçue (c1) au moyen de la clé auxiliaire (k) ;

- génération d'une clé d'authentification de serveur publique (B) ;

- calcul de la paire de clés avec deux clés de base (kDH1) et (kDH2) dans le serveur à partir de la clé d'authentification de client (A) et d'une valeur de vérification de mot de passe de client (v), de préférence au moyen d'une fonction de dérivation de clé ;

- calcul de la valeur de vérification de clé (k1) à partir de la clé de base (kDH1) et ensuite suppression de la clé de base (kDH1) pour former la base de clé (Sbs) pour le serveur ;

- formation d'une deuxième valeur cryptographique d'authentificateur (c2) dans le serveur par cryptage d'une clé d'authentification de serveur (B) avec la clé auxiliaire (k) ;

- transmission de la deuxième valeur cryptographique d'authentificateur (c2) au client ;

- calcul indépendant de la clé d'authentification de serveur (B) dans le client par cryptage de la valeur cryptographique d'authentificateur reçue (c2) au moyen de la clé auxiliaire (k) ;

- calcul de la paire de clés avec les deux clés de base (kDH1, kDH2) dans le client de préférence au moyen d'une fonction de dérivation, à partir de la clé d'authentification de serveur (B) et d'une valeur de vérification de mot de passe de serveur (w) ;

- calcul de la valeur de vérification de clé (k2) à partir de la clé de base (kDH2) et ensuite suppression de la clé de base (kDH2) pour former la base de clé (Sbc) pour le client.

8. Procédé selon la revendication précédente, **caractérisé en ce que** fait suite à la génération de la base de clé dans le client et dans le serveur un contrôle d'intégrité qui comporte préférentiellement les étapes suivantes :

- formation d'une première somme de contrôle (R1) dans le client, de préférence au moyen d'une fonction de hachage, à partir de la valeur de vérification de clé (k2) pour la clé de base du serveur et la clé de base du client (kDH1) ;

- transmission de la somme de contrôle (R1) au serveur ;

- formation d'une deuxième somme de contrôle (R2) dans le serveur, de préférence au moyen d'une fonction de hachage, à partir de la valeur de vérification de clé (k1) pour la clé de base du client et la clé de base du serveur (kDH2) ;

- vérification de l'identité entre les sommes de contrôle (R1) et (R2) dans le serveur ;

- formation d'une troisième somme de contrôle (R3) dans le serveur, composée de la deuxième somme de contrôle (R2), de la clé de base du serveur (kDH2) et de la valeur de vérification de clé (k1) pour la clé de base du client, de préférence au moyen d'une fonction de hachage ;

- transmission de la troisième somme de contrôle (R3) au client ;

- formation d'une quatrième somme de contrôle (R4) dans le client à partir de la première somme de contrôle (R1), de la valeur de vérification de clé (k2) pour la clé de base du serveur et de la clé de base du client (kDH1), de préférence au moyen d'une fonction de hachage ;

- vérification de l'identité entre les sommes de contrôle (R3 et R4) dans le client et

- interruption de la génération de clé en cas de non-identité entre les sommes de contrôle (R1 et R2) ou les sommes de contrôle (R3 et R4).

9. Procédé selon l'une des revendications précédentes, **caractérisé en ce que** la génération de la clé de session (kSitzung) comporte les étapes suivantes :

- calcul d'une valeur de base de client (X3) dans le client au moyen de paramètres et de valeurs disponibles, y compris la base de clé (Sbc) ;

- calcul d'une clé de session (kSitzung) et, optionnellement, d'une clé de signature (kSignatur) pour le client, de préférence au moyen d'une fonction de dérivation, à partir de la valeur de base de client (X3) ;

- calcul d'une valeur de base de serveur (X4) dans le serveur au moyen de paramètres et de valeurs disponibles, y compris la base de clé (Sbs) ;

- calcul de la clé de session (kSitzung) et, optionnellement, d'une clé de signature (kSignatur) pour le serveur, de préférence au moyen d'une fonction de dérivation, à partir de la valeur de base de serveur (X4).

10. Procédé selon la revendication 9, **caractérisé en ce que** fait suite à la génération de la clé de session dans le client et le serveur un contrôle d'intégrité qui comporte préférentiellement les étapes suivantes :

- formation d'une somme de contrôle (R5) dans le client, de préférence au moyen d'une fonction de hachage moyennant l'utilisation de la clé de signature optionnelle (kSignatur), à partir de la clé de base du client (kDH1) et de la valeur de vérification de clé (k2) pour la clé de base du serveur ;
- transmission de la somme de contrôle (R5) au serveur ;
- formation d'une somme de contrôle (R6) dans le serveur, de préférence au moyen d'une fonction de hachage moyennant l'utilisation de la clé de signature optionnelle (kSignatur) à partir de la valeur de vérification de clé (k1) pour la clé de base du client et la clé de base du serveur (kDH2) ;
- vérification de l'identité entre les sommes de contrôle (R5 et R6) dans le serveur ;
- formation d'une somme de contrôle (R7) à partir de la somme de contrôle (R6), de la valeur de vérification de clé (k1) pour la clé de base du client et de la clé de base du serveur (kDH2), de préférence au moyen d'une fonction de hachage ;
- transmission de la somme de contrôle (R7) au client ;
- formation d'une somme de contrôle (R8) dans le client à partir de la somme de contrôle (R5), de la clé de base du client (kDH1) et de la valeur de vérification de clé (k2) pour la clé de base du client, de préférence au moyen d'une fonction de hachage ;
- vérification de l'identité entre les sommes de contrôle (R7 et R8) dans le client ;
- interruption optionnelle de la génération de clé en cas de non-identité entre les sommes de contrôle (R5 et R6) ou les sommes de contrôle (R7 et R8).

11. Procédé selon l'une des revendications 9 ou 10, **caractérisé en ce que** la clé de session (kSitzung) est utilisée pour le cryptage de données ou d'informations à transmettre entre le client et le serveur, de préférence dans une application individuelle qui exécute une communication entre le client et le serveur, une propre clé de session (kSitzung) étant préférentiellement générée et utilisée pour chaque application qui exécute une communication entre le client et le serveur.

12. Procédé selon l'une des revendications 9 à 11, **caractérisé en ce que** la clé de session utilisée (kSitzung) est limitée dans le temps et expire au terme d'une durée de préférence donnée et est, très préférentiellement, supprimée.

13. Procédé selon l'une des revendications 9 à 12, **caractérisé en ce que** la clé de session utilisée (kSitzung) est supprimée lorsqu'une session avec communication entre le client et le serveur est terminée ou interrompue, ou est suspendue, de préférence pour une durée prédéterminée.

14. Procédé selon l'une des revendications précédentes, **caractérisé en ce que** le calcul de la clé (A, B) s'effectue respectivement à partir d'une valeur aléatoire (a, b) pouvant être choisie librement.

15. Procédé selon l'une des revendications précédentes, **caractérisé en ce que** la formation des valeurs cryptographiques d'authentificateur (c1, c2) s'effectue au moyen d'une fonction de cryptage (E) pour laquelle il existe une fonction de décryptage correspondante ($E^{-1}$).

Fig. 1

Fig. 2